# EUROPEAN PATENT SPECIFICATION

(11) **EP 4 435 445 B1**
(45) Date of publication and mention of the grant of the patent: **14.10.2026**
(21) Application number: 24154355.2
(22) Date of filing: 29.01.2024
(51) Int. Cl.: G01R 31/3185

(54) **INTEGRATED CIRCUIT AND OPERATING METHOD THEREOF**
INTEGRIERTE SCHALTUNG UND BETRIEBSVERFAHREN DAFÜR
CIRCUIT INTÉGRÉ ET SON PROCÉDÉ DE FONCTIONNEMENT

(30) Priority: 24.03.2023 KR 20230039013; 28.04.2023 KR 20230056641
(43) Date of publication of application: 25.09.2024
(73) Proprietor: Samsung Electronics Co., Ltd., Suwon-si, Gyeonggi-do 16677 (KR)
(72) Inventor: KIM, Moongyung, 16677 Suwon-si (KR); EOM, Youngsik, 16677 Suwon-si (KR); WON, Euiyeon, 16677 Suwon-si (KR); CHO, Ara, 16677 Suwon-si (KR); HAM, Donghyeon, 16677 Suwon-si (KR)
(74) Representative: Marks & Clerk LLP

(56) References cited:
- US-A1- 2008 092 002
- US-A1- 2010 174 956
- US-A1- 2015 212 151
- US-A1- 2017 192 053

## Description

### 1. Technical Field

The inventive concept relates to an integrated circuit, and more particularly, to an integrated circuit including a scan chain circuit and a method of operating the integrated circuit.

### 2. Discussion of Related Art

A semiconductor integrated circuit is a set of electronic circuits on one small flat piece (or "chip") of semiconductor material. A semiconductor integrated circuit with high performance and high integration may include a large number of flip-flops. Flip-flops are used as data storage elements. A flip-flop is an electronic circuit capable of storing and retaining one-bit of information and is a basic element of sequential logic circuits.

In addition, design for testability (DFT) technology is widely used to maintain the quality of semiconductor chips and improve test efficiency. Scan test technology is an example of one of these DFT technologies.

A sequence of the flip-flops that are connected in a chain-like structure may be referred to as a scan chain circuit. In the scan test technology, a scan dump operation may be performed to observe all or a portion of values of the flip-flops in the scan chain circuit to determine the cause of any unexpected behavior.
US 2010/174956-A discloses a semiconductor integrated circuit comprising, a scan chain which comprises, first flip-flops contained in a first circuit and second flip-flops contained in a second circuit, wherein said first flip-flops and said second flip-flops are connected in a series connection in a scan path test mode to operate as a shift register, and a first selecting circuit configured to selectively output a test data in the scan path test mode and internal state data indicating an internal state of said first flip-flops and read from a memory circuit in a restoring operation in a normal mode to said series connection; and a backup control circuit configured to control said scan chain in a saving operation in the normal mode such that the internal state data is stored in the memory circuit without passing through said second flip-flops, in the restoring operation in the normal mode such that the internal state data from said first selecting circuit is set in said first flip-flops without passing through said second flip-flops, and in the scan path test mode such that the test data is shifted in the series connection.
US 2017/192053-A discloses a device, comprising a digital circuit; a scan chain coupled to the digital circuit, wherein the scan chain, in operation, loads data into the digital circuit and unloads data from the digital circuit; and checking circuitry coupled to the scan chain, wherein the checking circuitry, in operation, generates a first digital signature based on data indicative of a pre-testing status of the digital circuit as the data is unloaded from the digital circuit via the scan chain; generates a second digital signature based on the data indicative of the pre-testing status of the digital circuit as the data is loaded into the digital circuit via the scan chain; compares the first digital signature to the second digital signature; and generates a control signal based on the comparison.

### SUMMARY

At least one embodiment of the inventive concept relates to an integrated circuit including a scan chain circuit and provides an effect of maintaining a state of an internal circuit of the integrated circuit even after a scan dump operation through a feedback line.
The invention provides an integrated circuit and a method as set out in the appended claims.

### BRIEF DESCRIPTION OF THE DRAWINGS

Embodiments will be more clearly understood from the following detailed description taken in conjunction with the accompanying drawings in which:
FIG. 1 is a block diagram illustrating an integrated circuit according to an embodiment;
FIG. 2 is a diagram for explaining an IP block according to an embodiment;
FIG. 3 is a diagram for explaining an integrated circuit according to an embodiment;
FIG. 4 is a diagram for explaining a control circuitry according to an embodiment;
FIG. 5 is a diagram for explaining a sequential logic circuit included in a scan chain circuit according to an embodiment;
FIG. 6 is a diagram illustrating an example of a scan chain circuit according to an embodiment;
FIG. 7 is a diagram illustrating an example of a scan chain circuit according to an embodiment;
FIG. 8 is a diagram illustrating an example of a scan chain circuit;
FIG. 9 is a diagram illustrating an example of a scan chain circuit;
FIG. 10 is a diagram illustrating an example of a scan chain circuit;
FIG. 11 is a diagram for explaining an example of a scan chain circuit according to an embodiment;
FIG. 12 is a flowchart illustrating a method of operating an integrated circuit, according to an embodiment;
FIG. 13 is a flowchart illustrating a method of operating an integrated circuit, according to an embodiment;
FIG. 14 is a flowchart illustrating a method of operating an integrated circuit, according to an embodiment;
FIG. 15 is a flowchart illustrating a method of operating an integrated circuit, according to an embodiment;
FIG. 16 is a flowchart illustrating a method of operating an integrated circuit, according to an embodiment;
FIG. 17 is a flowchart illustrating a method of operating an integrated circuit, according to an embodiment;
FIG. 18 is a flowchart illustrating a method of operating an integrated circuit, according to an embodiment;
FIG. 19 is a block diagram illustrating an integrated circuit according to an embodiment; and
FIG. 20 is a block diagram illustrating an integrated circuit according to an embodiment.

### DETAILED DESCRIPTION OF THE EMBODIMENTS

Hereinafter, embodiments will be described in detail with reference to the accompanying drawings.

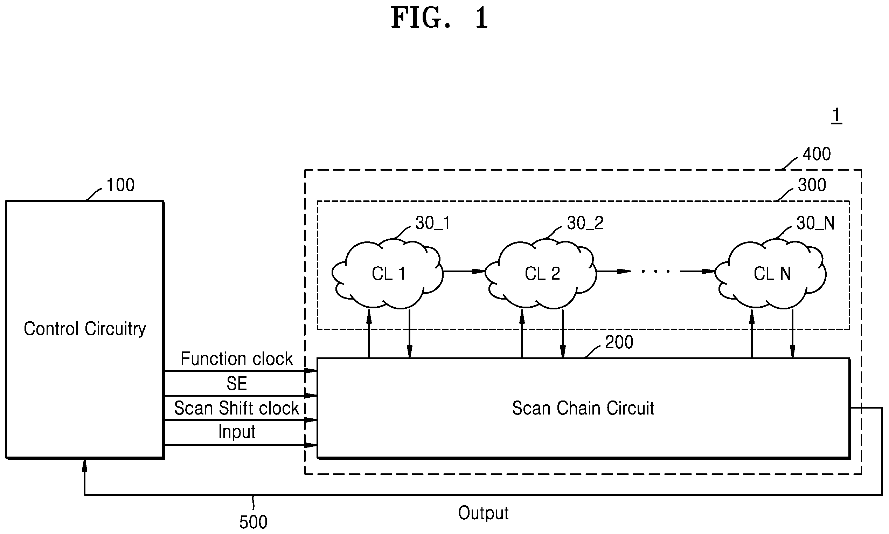

FIG. 1 is a block diagram illustrating an integrated circuit according to an embodiment.

Referring to FIG. 1, an integrated circuit 1 includes a control circuitry 100, an intellectual property (IP) IP block 400, and a feedback line 500. The IP block 400 includes a scan chain circuit 200 and a plurality of combinational logic circuits 300.

Here, the feedback line 500 may be configured to input output values Output of the scan chain circuit 200 to the scan chain circuit 200 as input values Input. For example, the feedback line 500 provides the output values Output of the scan chain circuit 200 to the control circuitry 100 so that the control circuitry 100 may input output values Output of the scan chain circuit 200 to the scan chain circuit 200 as input values Input.

The plurality of combinational logic circuits 300 may include a first combinational logic circuit 30_1, a second combinational logic circuit 30_2, ..., and an Nth combinational logic circuit 30_N. Here, the first to Nth combinational logic circuits 30_1, 30_2, ..., 30_N may be circuits that output the same output data for the same input data. Here, a connection relationship does not necessarily exist between the plurality of combinational logic circuits 300. For example, an output value of the first combinational logic circuit 30_1 need not necessarily be input as an input value of the second combinational logic circuit 30_2.

The scan chain circuit 200 includes a plurality of sequential logic circuits. Here, a sequential logic circuit may be a circuit including a memory element. The sequential logic circuit may be a circuit that outputs different output data according to a storage state even when the same input data is input. Also, the plurality of sequential logic circuits may be a plurality of sequential logic circuits connected in series with each other. The sequential logic circuit may include a scan flip-flop. The scan flip-flop will be described with reference to other drawings.

The integrated circuit 1 includes a plurality of combinational logic circuits 300 and a scan chain circuit 200. In this case, the sequential logic circuits may be connected to the plurality of combinational logic circuits 300 to form a scan path. In FIG. 1, all of the plurality of combinational logic circuits 300 in the integrated circuit 1 are connected to the scan chain circuit 200. However, the embodiments are not limited thereto. In an embodiment, a combinational logic circuit within the integrated circuit 1 that does not require a scan test may be disconnected from the scan chain circuit 200. According to an embodiment, the integrated circuit 1 may be implemented as a system on-chip (SoC).

The control circuitry 100 may output a signal for instructing the operation of the scan chain circuit 200. For example, the control circuitry 100 may output signals instructing operations of sequential logic circuits included in the scan chain circuit 200. Also, the control circuitry 100 may output a scan enable signal SE to the scan chain circuit 200.

The sequential logic circuit included in the scan chain circuit 200 may perform a normal operation or a scan shift operation according to the logic level of the scan enable signal SE.

Specifically, when the scan enable signal SE indicates a normal operation, the scan chain circuit 200 may provide latched input values to a plurality of combinational logic circuits 300 and store output values of input values of the plurality of combinational logic circuits 300 in synchronization with a function clock (e.g., a first clock signal). Here, for example, when the scan enable signal SE is at a first logic level (e.g., a logic low level), normal operation may be instructed to the scan chain circuit 200.

When the scan enable signal SE instructs a scan shift operation, the scan chain circuit 200 may sequentially output the output values of the plurality of combinational logic circuits 300 at a certain time point in synchronization with a scan shift clock (e.g., a second clock signal). Here, for example, when the scan enable signal SE is at a second logic level (e.g., a logic high level), the scan chain circuit 200 may be instructed to perform a scan shift operation. For example, the output values may be output in response to a rising edge or a falling edge of the scan shift clock.

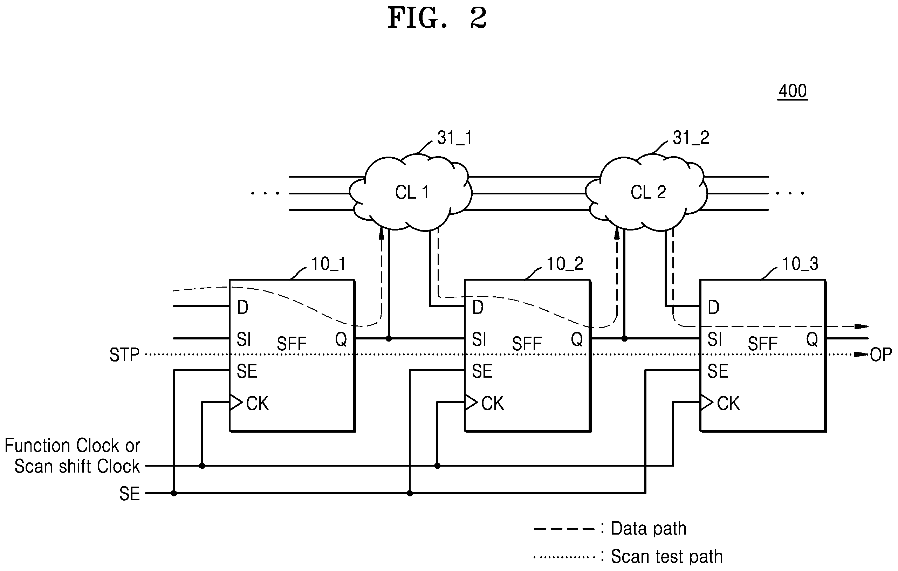

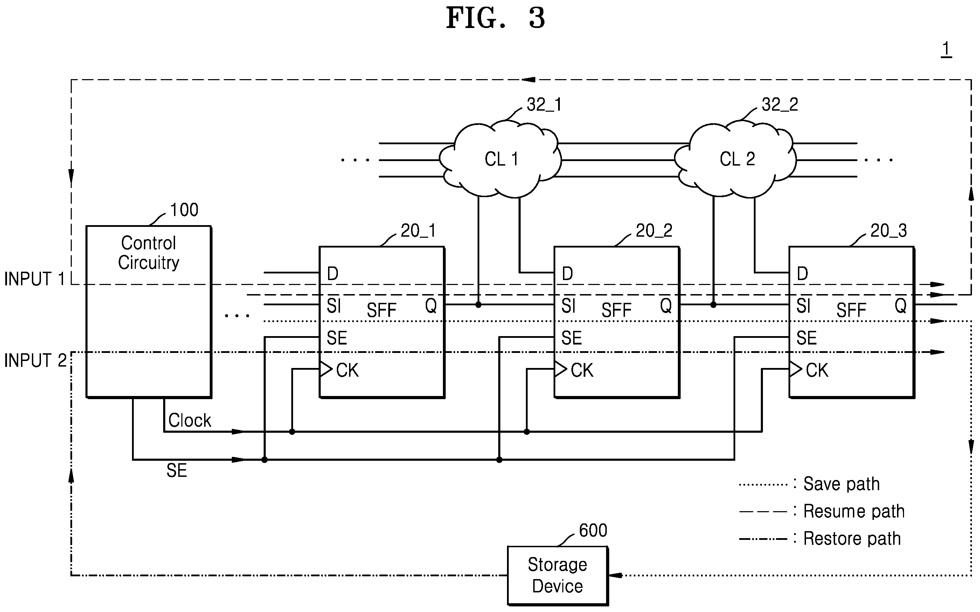

A method of performing a scan shift operation or normal operation by sequential logic circuits included in the scan chain circuit 200 is described in detail with reference to FIGS. 2 and 3.

The control circuitry 100 may control the operation of the IP block 400 by causing sequential logic circuits included in the scan chain circuit 200 to perform a normal operation or a scan shift operation. Here, the operation of the IP block 400 may include a save operation, a resume operation, a restore operation, and the like. Alternatively, the scan chain circuit 200 or a plurality of sequential logic circuits included in the scan chain circuit 200 may perform a save operation, a resume operation, or a restore operation in response to an output of the control circuitry 100.

The save operation is an operation to save the state of an internal circuit of the IP block 400 at a certain time point. That is, the save operation may refer to an operation of sequentially outputting output values stored at a certain time point to a plurality of sequential logic circuits included in the scan chain circuit 200. The save operation may include a capture operation and a scan-out operation of the scan chain circuit 200 described with reference to FIG. 2. In an embodiment, the scan test operation in the scan test technology includes a scan-in operation, a capture operation, and a scan-out operation, but the save operation includes the scan-out operation but not the scan-in operation and the capture operation.

In an embodiment, the IP block 400 performs a save operation based on normal operations and scan shift operations of sequential logic circuits included in the scan chain circuit 200.

In addition, the resume operation may be performed simultaneously with the save operation, and is an operation of restoring the state of the internal circuit of the IP block 400 to the state of the internal circuit of the IP block 400 before the save operation. That is, the resume operation may refer to an operation of making the output values stored in the sequential logic circuits during the save operation be the same as the output values stored in the plurality of sequential logic circuits before the save operation.

In an embodiment, while the scan chain circuit 200 performs a save operation, the integrated circuit 1 inputs output values of the scan chain circuit 200 as input values through the feedback line 500 to the scan chain circuit 200 to perform a resume operation.

In an embodiment, the IP block 400 performs a resume operation based on a scan shift operation and a normal operation of sequential logic circuits included in the scan chain circuit 200.

Also, the restore operation is an operation of loading the state of an internal circuit of the IP block 400 stored in an external device at a certain time point into the IP block 400. That is, the restore operation may refer to an operation of sequentially inputting output values stored at a certain time point to a plurality of sequential logic circuits included in the scan chain circuit 200 stored in the storage device to the scan chain circuit.

In an embodiment, the IP block 400 performs a restore operation based on a scan shift operation and a normal operation of sequential logic circuits included in the scan chain circuit 200.

A save operation, a resume operation, and a restore operation are described in detail with reference to FIG. 3.

Moreover, the sequential logic circuit included in the scan chain circuit 200 may perform a normal operation or a scan shift operation to track and analyze the internal operation of the plurality of combinational logic circuits 300, and this may be referred to as a scan dump operation.

First, referring to FIG. 2, a scan dump operation, a scan shift operation, and a normal operation are described in detail.

FIG. 2 is a diagram for explaining an IP block according to an embodiment.

Referring to FIG. 2, the IP block 400 may include a plurality of combinational logic circuits including a first combinational logic circuit 31_1 and a second combinational logic circuit 31_2 and a scan chain circuit including a plurality of scan flip-flops. For example, the scan chain circuit includes first, second, and third scan flip-flops 10_1, 10_2, and 10_3. Here, a scan flip-flop may be a flip-flop that receives a data signal D, a scan input signal SI, or a scan enable signal SE, and outputs an output signal Q according to a clock signal CK.

The scan enable signal SE may indicate a normal operation or a scan shift operation of the first, second, and third scan flip-flops 10_1, 10_2, and 10_3 according to a logic level.

When the scan enable signal SE indicates a normal operation, the first scan flip-flop 10_1 may provide the latched data as an output signal Q to the first combinational logic circuit 31_1, and the second scan flip-flop 10_2 may latch the output value of the first combinational logic circuit 31_1 for the output signal Q of the first scan flip-flop 10_1 in synchronization with the function clock. That is, when the scan enable signal SE indicates a normal operation, data may be transmitted along a data path and the original function of the IP block 400 may be performed.

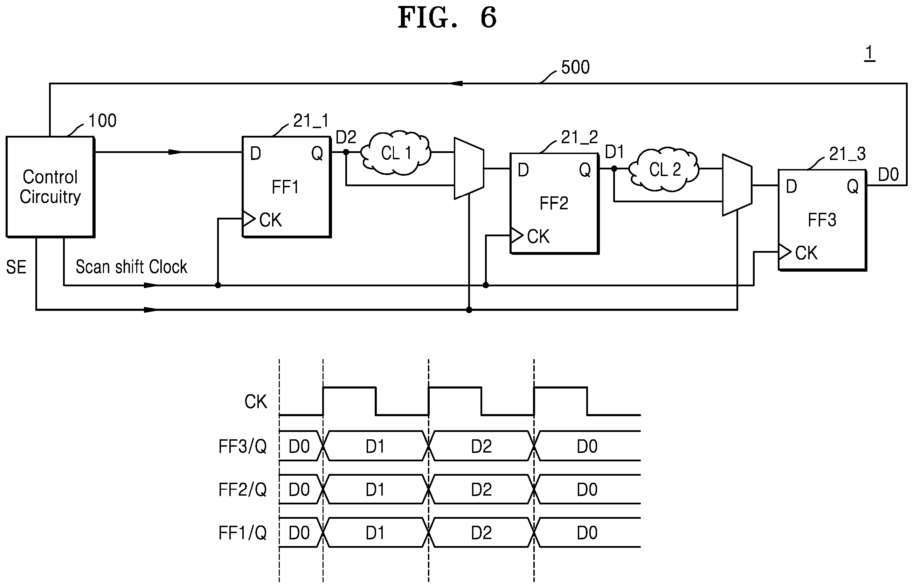

In an embodiment, the first combinational logic circuit 31_1 does not receive the output signal Q of the first scan flip-flop 10_1 as input and provides the output value of the first combinational logic circuit 31_1 as a data signal D to the second scan flip-flop 10_2. That is, for the first, second, and third scan flip-flops 10_1, 10_2, and 10_3 to latch the output values of the first and second combinational logic circuits 31_1 and 31_2, the first, second, and third scan flip-flops 10_1, 10_2, and 10_3 need not provide the output signals Q of the first, second, and third scan flip-flops 10_1, 10_2, and 10_3 to the first and second combinational logic circuits 31_1 and 31_2. The above description may also be applied to flip-flops and combinational logic circuits described with reference to FIGS. 6 to 11.

When the scan enable signal SE instructs performance of a scan shift operation, the second scan flip-flop 10_2 may provide data latched in the second scan flip-flop 10_2 as a scan input signal SI to the third scan flip-flop 10_3. That is, when the scan enable signal SE instructs performance of a scan shift operation, the scan shift operation may be performed by transmitting data along a scan test path.

In this case, the scan test path may be referred to as a scan in path or a scan out path. Specifically, the scan in path refers to a path through which data is input to a scan chain circuit and transmitted to a plurality of sequential logic circuits, and the scan out path may refer to a path through which data is transmitted by outputting data from a plurality of sequential logic circuits.

In the scan test operation, an error occurring in an internal circuit of the IP block may be confirmed by comparing a scan test pattern STP to an output pattern OP. The scan test pattern STP may be an input bit string, and the output pattern OP may be an output bit string corresponding to the scan test pattern STP.

In detail, the scan test operation may be performed as a scan-in operation, a capture operation, and a scan-out operation.

The scan-in operation is an operation that sequentially changes the state value of each of, for example, the first, second, and third scan flip-flops 10_1, 10_2, and 10_3 by sequentially inputting the scan test pattern STP to the first, second, and third scan flip-flops 10_1, 10_2, and 10_3 included in the scan chain circuit. When the scan test pattern STP is delivered to a preset scan flip-flop, the scan-in operation may be terminated. At this time, the scan-in operation may be performed based on the scan shift operation of the first, second, and third scan flip-flops 10_1, 10_2, and 10_3.

The capture operation is an operation of storing the output values of, for example, the first and second combinational logic circuits 31_1 and 31_2 for the data stored in the first, second, and third scan flip-flops 10_1, 10_2, and 10_3 in the first, second, and third scan flip-flops 10_1, 10_2, and 10_3. Here, data stored in the first, second, and third scan flip-flops 10_1, 10_2, and 10_3 may be a scan test pattern STP. The capture operation is initiated after the scan-in operation, and may be performed based on normal operations of the first, second, and third scan flip-flops 10_1, 10_2, and 10_3. The first, second, and third scan flip-flops 10_1, 10_2, and 10_3 provide a latched scan test pattern STP to the coupled combinational, that is, the first and second logic circuits 31_1 and 31_2, and each of the first, second, and third scan flip-flops 10_1, 10_2, and 10_3 may latch the output value of each of the first and second combinational logic circuits 31_1 and 31_2 for the scan test pattern in synchronization with the function clock. At this time, the function clock may allow one cycle to pass.

The scan-out operation is an operation of sequentially outputting the output values of, for example, each of the first and second combinational logic circuits 31_1 and 31_2 stored in each of the first, second, and third scan flip-flops 10_1, 10_2, and 10_3. The scan-out operation may be performed based on the scan shift operation of the first, second, and third scan flip-flops 10_1, 10_2, and 10_3. At this time, the sequentially output values may be referred to as an output pattern OP, and errors occurring in the internal circuit of the IP block may be confirmed by comparing the scan test pattern STP to the output pattern OP.

The scan dump operation may be implemented to extract internal information by utilizing a scan chain implemented in scan test technology. The scan dump operation is an operation of extracting internal information from the scan chain circuit that was normally operating in the zone. For example, internal information may be extracted through a scan-out operation.

When the scan chain circuit performs a scan-out operation, due to the scan shift operation of the first, second, and third scan flip-flops 10_1, 10_2, and 10_3, the values stored in the first, second, and third scan flip-flops 10_1, 10_2, and 10_3 before the scan-out operation are different from the values stored in the first, second, and third scan flip-flops 10_1, 10_2, and 10_3 after the scan-out operation.

That is, after performing the scan dump operation, all states of the internal circuits of the IP block 400 are broken. Even if the clock function is synchronized with the IP block 400 after the scan dump operation, the IP block 400 cannot perform its original function.

In an embodiment, shown in FIG. 1, through the feedback line 500 inputting output values Output of the scan chain circuit 200 to the scan chain circuit 200 as input values Input, even after a scan dump operation or a save operation to be described below, the state of an internal circuit of the IP block 400 may be maintained or restored.

In this case, the scan chain circuit 200 including the feedback line 500 may be referred to as a circular scan chain circuit.

The save operation, resume operation, and restore operation of the circular scan chain circuit will be described in detail with reference to FIG. 3.

FIG. 3 is a diagram for explaining an integrated circuit according to an embodiment.

Referring to FIG. 3, an integrated circuit 1 may include a control circuitry 100, an IP block, and a storage device 600. The IP block may include a plurality of combinational logic circuits and scan chain circuits. The plurality of combinational logic circuits include a first combinational logic circuit 32_1 and a second combinational logic circuit 32_2, and the scan chain circuit may include a first sequential logic circuit 20_1, a second sequential logic circuit 20_2, and a third sequential logic circuit 20_3.

The control circuitry 100 may provide a scan enable signal SE, a clock signal including a function clock or a scan shift clock, and input values to the first, second, and third sequential logic circuits 20-1, 20-2, and 20-3 included in the scan chain circuits to enable a scan chain circuit to perform a save operation, a resume operation, or a restore operation.

The first, second, and third sequential logic circuits 20_1, 20_2, and 20_3 included in the scan chain circuit perform a normal operation or a scan shift operation according to the logic level of the scan enable signal SE.

When the scan enable signal SE indicates a normal operation, the first sequential logic circuit 20_1 provides the stored input value to the first combinational logic circuit 32_1 and the second sequential logic circuit 20_2 may store output values for input values stored in the first sequential logic circuit 20_1 of the first combinational logic circuit 32_1 in synchronization with the function clock. That is, data may be transmitted along the data path described with reference to FIG. 2.

When the scan enable signal SE instructs performance of a scan shift operation, the first, second, and third sequential logic circuits 20_1, 20_2, and 20_3 sequentially output the output values of the first and second combinational logic circuits 32_1 and 32_2 in synchronization with the scan shift clock. Also, when the scan enable signal SE instructs performance of a scan shift operation, the first, second, and third sequential logic circuits 20_1, 20_2, and 20_3 may sequentially output the input values of the control circuitry 100 in synchronization with the scan shift clock. That is, when the scan enable signal SE instructs performance of a scan shift operation, a scan chain circuit may function as a shift register. Here, the scan chain circuit may perform a scan shift operation for a preset number of bits. That is, data may be transmitted along the scan in path or scan out path described with reference to FIG. 2.

In an embodiment, the integrated circuit 1 performs a save operation, a resume operation, or a restore operation based on the normal operation and scan shift operation of the first, second, and third sequential logic circuits 20_1, 20_2, and 20_3.

First, the save operation is described.

First of all, the control circuitry 100 may provide a scan enable signal SE and a function clock indicating normal operation to the scan chain circuit. If the scan chain circuit is performing a normal operation, the first, second, and third sequential logic circuits 20_1, 20_2, and 20_3 store output values of the first and second combinational logic circuits 32_1 and 32_2 in synchronization with the function clock.

In an embodiment, when the scan enable signal SE is at the first logic level (e.g., a logic low level), the first, second, and third sequential logic circuits 20_1, 20_2, and 20_3 store first output values of the plurality of combinational logic circuits 32_1 and 32_2 at the first time point in synchronization with the function clock. Here, the first time point may be a time point at which a preset number of cycles of the function clock have passed or a time point determined by a save request received from an external device. After that, the control circuitry 100 may end providing the clock function to the scan chain circuit. That is, data may be transmitted along the data path described with reference to FIG. 2.

After the provision of the function clock has terminated, the control circuitry 100 may provide a scan enable signal SE and a scan shift clock for instructing performance of a scan shift operation to a scan chain circuit.

In an embodiment, when the scan enable signal SE is at the second logic level (e.g., a logic high level), the first, second, and third sequential logic circuits 20_1, 20_2, and 20_3 sequentially provides first output values of first time points of the plurality of combinational logic circuits in synchronization with the scan shift clock.

Also, the scan chain circuit may perform a scan shift operation to sequentially provide output values to the storage device 600.

When the scan chain circuit performs a scan shift operation, the first, second, and third sequential logic circuits 20_1, 20_2, and 20_3, for example, sequentially output the output values of the first and second combinational logic circuits 32_1 and 32_2 in synchronization with the scan shift clock. That is, data may be transmitted along the scan out path described with reference to FIG. 2.

Through this, the storage device 600 may store the state of the internal circuit of the IP block at the first time point based on the sequentially output values.

That is, a save operation may be performed by transmitting data along a save path in the integrated circuit 1.

In an embodiment, the scan chain circuit sequentially provides output values to the storage device 600 by performing a scan shift operation until a certain time point at which a preset cycle of the scan shift clock passes.

A case in which one piece of data moves from the previous scan flip-flop to the next scan flip-flop when the scan shift clock has passed one cycle is described.

In an embodiment, to provide the storage device 600 with output values stored in all sequential circuits included in the scan chain circuit, the scan chain circuit may perform a scan shift operation until a second time point at which clock cycles of the scan shift have passed as many as the total number of scan flip-flops included in the scan chain circuit. For example, if the scan chain circuit includes 3 scan flip-flops, the scan chain circuit may perform the scan shift operation until the time point at which 3 cycles of the scan shift clock pass.

Hereafter, the resume operation is described.

In an embodiment, the integrated circuit 1 performs a resume operation by inputting output values of the scan chain circuit to the scan chain circuit as first input values INPUT 1 through a feedback line while the scan chain circuit performs the save operation. That is, the resume operation may be performed by transmitting data along a resume path in the integrated circuit 1.

First, as explained in the save operation, the first, second, and third sequential logic circuits 20_1, 20_2, and 20_3 may store first output values of the first time points of the first and second combinational logic circuits 32_1 and 32_2 in synchronization with the function clock. That is, data may be transmitted along the data path described with reference to FIG. 2.

After storing the first output values of the first time point, the control circuitry 100 may provide a scan enable signal SE indicating a scan shift operation, a scan shift clock, and first output values INPUT1 of the scan chain circuit to the scan chain circuit. That is, data may be transmitted along the scan out path described with reference to FIG. 2.

The first, second, and third sequential logic circuits 20_1, 20_2, and 20_3 included in the scan chain circuit may sequentially provide first output values of the plurality of combinational logic circuits at the first time point in synchronization with the scan shift clock in response to the scan enable signal SE.

Here, the integrated circuit 1 may include a feedback line configured to input the first output values as input values to the scan chain circuit. The scan chain circuit may perform a scan shift operation and sequentially provide first output values INPUT1 to the scan chain circuit through a feedback line. That is, data may be transmitted along the scan in path described with reference to FIG. 2.

In an embodiment, the control circuitry 100 receives the first output values INPUT1 stored in the first, second, and third sequential logic circuits 20_1, 20_2, and 20_3 as input values at a first time point and sequentially provides input values corresponding to the first output values INPUT1 to the scan chain circuit. That is, data may be transmitted from a scan out path to a scan in path through a feedback line.

When the scan chain circuit performs the shift operation, the first, second, and third sequential logic circuits 20_1, 20_2, and 20_3 may sequentially store input values in synchronization with the scan shift clock. For example, when one cycle of the scan shift clock passes, data latched in the third scan flip-flop 20_3 may be transferred to the scan flip-flop connected to the control circuitry 100 through the feedback line.

The control circuitry 100 may provide a scan shift clock to the scan chain circuit so that input values corresponding to the first output values INPUT1 are shifted by the first cycle of the scan shift clock.

The scan chain circuit may perform a scan shift operation by as many as the first cycle of the scan shift clock and store first input values at a second time point occurring when the first cycle of the scan shift clock passes. Here, the first input values stored in the first, second, and third sequential logic circuits 20_1, 20_2, and 20_3 at the second time point occurring when the first cycle of the scan shift clock passes may be the same as the first output value stored in the first, second, and third sequential logic circuits 20_1, 20_2, and 20_3 at the first time point.

In addition, the second time point may be a time point occurring when the cycle of the scan shift clock passes so that the state of the internal circuit of the IP block before the save operation and the state of the internal circuit of the IP block after the save operation are the same. That is, this may be a time point occurring when the first cycle of the scan shift clock passes so that values stored in the plurality of sequential logic circuits after the save operation are the same as values stored in the plurality of sequential logic circuits before the save operation. To make the values stored in the plurality of sequential logic circuits after the save operation be the same as the values stored in the plurality of sequential logic circuits before the save operation, the control circuitry 100 may adjust the first cycle of the scan shift clock it provides to the scan chain circuit. A method of determining the first cycle of the scan shift clock is described in detail with reference to other drawings.

When the first, second, and third sequential logic circuits 20_1, 20_2, and 20_3 store the first input values, the control circuitry 100 may provide a scan enable signal SE and a function clock indicating a normal operation to the scan chain circuit. That is, the control circuitry 100 may change the clock provided to the scan chain circuit from a scan shift clock to a function clock and provide the corresponding clock. Accordingly, the first and second combinational logic circuits 32_1 and 32_2 may operate the first input values stored in the first, second, and third sequential logic circuits 20_1, 20_2, and 20_3 as input values. Through this, the inventive concept has the effect of maintaining the state of the internal circuit of the IP block even after the save operation.

Hereafter, the restore operation is described.

The control circuitry 100 may receive the second input values INPUT2 from the storage device 600 as input values and sequentially provide the second input values INPUT2 to the scan chain circuit in synchronization with the scan shift clock. Here, the storage device 600 may store the state of the internal circuit of the IP block stored at a certain time point and provide the control circuitry 100 with second input values INPUT2 corresponding to states of internal circuits of the IP block stored at a certain time point.

The control circuitry 100 may provide a scan enable signal SE indicating a scan shift operation, a scan shift clock, and second input values INPUT2 to the scan chain circuit. That is, data may be transmitted along the scan in path described with reference to FIG. 2.

The control circuitry 100 may provide a scan shift clock to the scan chain circuit so that input values corresponding to the second input values INPUT2 are shifted by the second cycle of the scan shift clock. That is, the control circuitry 100 may provide the second cycle of the scan shift clock to the scan chain circuit.

The scan chain circuit may perform a scan shift operation by as much as the second cycle of the scan shift clock and store third input values at a third time point at which the second cycle of the scan shift clock passes. Here, the third input value stored in the first, second, and third sequential logic circuits 20_1, 20_2, and 20_3 at the third time point occurring when the second cycle of the scan shift clock passes may be the same as the second input values INPUT2 provided from the storage device 600. According to embodiments, the second cycle may be the same as or different from the first cycle described above.

That is, a restore operation may be performed by transmitting data along a restore path in the integrated circuit 1.

Through this, the inventive concept has the effect of loading the IP block with the state of the internal circuit of the IP block stored at a certain time point in the external device.

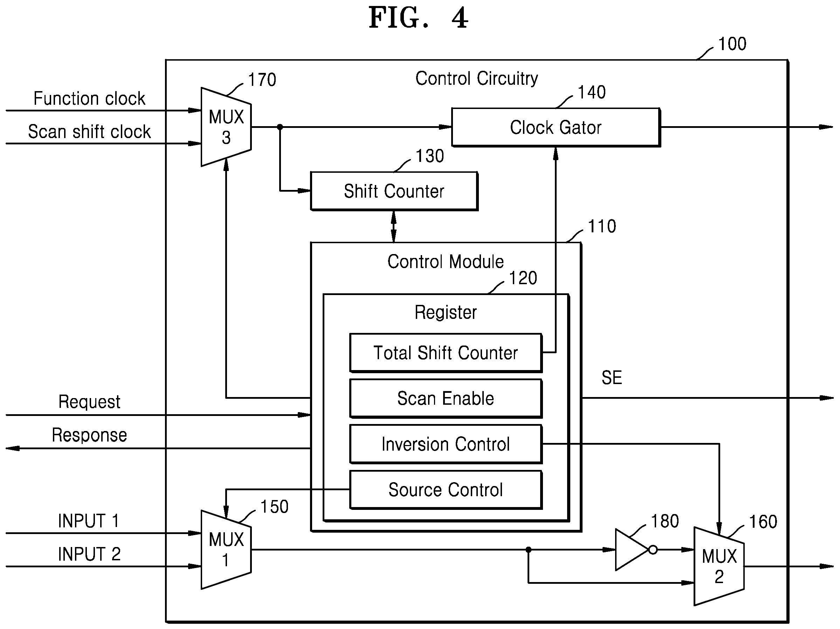

FIG. 4 is a diagram for explaining a control circuitry according to an embodiment.

Referring to FIG. 4, the control circuitry 100 may include a control module 110 (e.g., a control circuit), a register 120, a shift counter 130, a clock gator 140 (e.g., a gating circuit), a first selector 150 (e.g., a first selector circuit or first multiplexer), a second selector 160 (e.g., a third selector circuit or third multiplexer), a third selector 170 (e.g., a third selector circuit or third multiplexer), and an inverter circuit 180.

The control module 110 may control the control circuitry 100 so that the control circuitry 100 may output a signal instructing performance of an operation of the IP block based on the value stored in the register 120.

The register 120 may store a source control value of which input values are determined as the first input values INPUT1 or the second input values INPUT2 based on a total shift count value corresponding to the number of scan shift clock cycles required when the main chain circuit performs a scan shift operation, a scan enable value that sets the scan dump operation to start, the number of inverter circuits included in the scan test path of the scan chain circuit, and the inversion control value that decides to enter the inverted input value and a request for a resume action or a request for a restore action.

The shift counter 130 may count the number of passed cycles of the clock to generate a counting result value and provide the counting result value to the control module 110. Also, the control module 110 may provide a signal for controlling the shift counter 130 to the shift counter 130 based on the counting result value.

The clock gator 140 may gate the input clock based on the clock gating signal of the control module 110.

The first selector 150 may output first input values INPUT1 that are output values of a scan chain circuit or output second input values INPUT2 that are input values of a storage device in response to a source control signal based on a source control value. For example, when a source control value stored in the control module 110 indicates a resume operation, the first selector 150 may output first input values INPUT1 that are output values of the scan chain circuit in response to the source control signal output from the control module 110. Also, when the source control value stored in the control module 110 indicates a restore operation, the first selector 150 may output second input values INPUT2 that are input values of the storage device in response to the source control signal output by the control module 110.

In an embodiment, the first selector 150 outputs the output values to a scan chain circuit through a feedback line or outputs input values received from a storage device to a scan chain circuit in response to a source control signal.

The second selector 160 may output input values or inverted input values in response to the inversion control signal based on the inversion control value. Here, the inverter circuit 180 may be connected between the output terminal of the first selector 150 and the first input terminal of the second selector 160.

The third selector 170 may output a function clock or a scan shift clock in response to a clock change request of the control module 110. For example, the third selector 170 may output one of the function clock and the scan shift clock.

In an embodiment, the third selector 170 is located outside the control circuitry 100.

An operation method of the control circuitry 100 so that the scan chain circuit included in the IP block performs a save operation or a resume operation is described in detail.

In an initial state, the control module 110 may output a clock change request indicating output of the function clock to the third selector 170, and the third selector 170 may output the function clock to the scan chain circuit in response to the clock change request indicating output of the function clock. For example, the control module 110 may output a control signal to the third selector 170 that informs the third selector 170 to output the function clock.

The total shift count value, inversion control value, and source control value stored in the register 120 may be changed by a request for a save operation or a resume operation.

The control module 110 may output signals instructing performance of the operation of the shift counter 130, the clock gator 140, the first selector 150, the second selector 160, the third selector 170 and the scan chain circuit based on the total shift count value, the inverted value, and the source control value.

The control module 110 may output, to the clock gator 140, a clock gating signal instructing the clock gator 140 to gate the function clock, in response to a request for a save operation or a resume operation. In this case, at the first time point at which the provision of the function clock ends, the plurality of sequential logic circuits may store the state of an internal circuit of the IP block at the first time point. That is, sequential logic circuits included in the scan chain circuit may store first output values of a plurality of combinational logic circuits at a first time point.

The control module 110 may provide the changed total shift count value to the shift counter 130. In this case, the shift counter 130 may decrease the total shift count value by one every time one cycle of the scan shift clock passes. When the total shift count value of the shift counter 130 becomes 0, the shift counter 130 may provide the counting result value to the control module 110.

The first selector 150 may output first input values INPUT1 that are output values of the scan chain circuit in response to a source control signal based on a source control value indicating a save operation or a resume operation. Here, the first input terminal of the first selector 150 may be connected to the output terminal of the scan chain circuit. That is, the first selector 150 may be connected to a feedback line configured to input the first output values INPUT1 of the scan chain circuit to the first input terminal of the first selector 150 as input values.

The second selector 160 may output input values or output inverted input values in response to an inversion control signal based on the changed inversion control value. Here, the input terminal of the second selector 160 may be connected to the output terminal of the first selector 150. That is, the second selector 160 may output the first output values INPUT1 of the scan chain circuit or output the inverted first output values of the scan chain circuit in response to the inversion control signal. The inverted output values may be generated by inverting the first output values INPUT1.

Thereafter, the control module 110 may output a scan enable signal SE indicating a scan shift operation to the scan chain circuit and output a clock change request indicating output of the scan shift clock to the third selector 170.

The third selector 170 may output a scan shift clock in response to a clock change request indicating output of the scan shift clock. Here, the clock gator 140 may terminate clock gating in response to a clock gating signal instructing the control module 110 to terminate clock gating.

A plurality of sequential logic circuits included in the scan chain circuit may perform a scan shift operation on the first output values INPUT1 or the inverted first output values in response to the scan enable signal SE instructing the scan shift operation.

Through this, the control circuitry 100 may sequentially provide the first output values INPUT1 or the inverted first output values as input values to the scan chain circuit through the feedback line. The scan chain circuit may sequentially store the input first output values INPUT1 or the inverted first output values in a plurality of sequential logic circuits in synchronization with the scan shift clock.

The scan chain circuit may perform a scan shift operation by as many as the first cycle of the scan shift clock and store first input values at a second time point at which the first cycle of the scan shift clock passes. Here, the first input values stored in the sequential logic circuits at the second time point occurring when the first cycle of the scan shift clock passes may be the same as the first output value stored in the sequential logic circuits at the first time point.

That is, data values stored at a first time point, which is a start time point of a save operation, in each sequential logic circuit connected to a plurality of combinational logic circuits and data values stored at the second time point, which is the end time point of the scan shift operation, are the same.

In an embodiment, when the total shift count value of the shift counter 130 becomes 0, the shift counter 130 may provide the counting result value to the control module 110. In this case, the counting result value may be a value indicating that the counting operation has ended. The control module 110 may output a clock gating signal to the clock gator 140 so that the clock gator 140 gates the scan shift clock based on the counting result value.

Here, the total shift count value may be the number of scan shift operations performed so that data values stored in the sequential logic circuits before the scan shift operation and data values stored in the sequential logics after the scan shift operation are the same. Also, the total shift count value may correspond to the number of cycles of the clock included in the first cycle of the above-described scan shift clock. That is, when the first cycle of the scan shift clock passes, the shift counter 130 may provide the counting result value to the control module 110. A method of determining the total shift count value is described in detail with reference to other drawings.

The clock gator 140 may gate the scan shift clock in response to the clock gating signal based on the counting result value.

Thereafter, the control module 110 may output a scan enable signal SE indicating normal operation to the scan chain circuit and output a clock change request indicating output of the function clock to the third selector 170. Also, the control module 110 may output a response indicating completion of the save operation or the resume operation.

After the second time point, the third selector 170 may output the function clock in response to a clock change request indicating output of the function clock. Here, the clock gator 140 may terminate clock gating in response to a clock gating signal instructing the control module 110 to terminate clock gating.

After the second time point, the plurality of sequential logic circuits included in the scan chain circuit may input first input values to the plurality of combinational logic circuits in response to the scan enable signal SE indicating a normal operation. First input values may be transmitted along a data path, and an original function of an IP block may be performed. Here, since the first input values are the same as the first output values of the first time point, which is the start time point of the save operation, the inventive concept has the effect of maintaining the state of the internal circuit of the IP block even after the save operation.

In an embodiment, the plurality of sequential logic circuits may store first output values of a first time point of the plurality of combinational logic circuits in synchronization with a function clock in response to the scan enable signal SE having a first logic level (e.g., a logic low level).

In addition, the control circuitry 100 may output a scan enable signal SE having a second logic level (e.g., a logic high level) to the scan chain circuit after the first time point and output a clock change request indicating output of the scan shift clock to the third selector 170. The third selector 170 may output the scan shift clock to the scan chain circuit in response to a clock change request indicating output of the scan shift clock.

Also, the plurality of sequential logic circuits included in the scan chain circuit may sequentially provide output values of the first time points of the plurality of combinational logics in synchronization with the scan shift clock in response to the second logic level (e.g., a logic high level) of the scan enable signal SE.

Also, when the scan enable signal SE is at the second logic level (e.g., a logic high level) and the source control signal is at the first logic level (e.g., a logic high level), the plurality of sequential logic circuits may sequentially provide first output values of a first time point of the plurality of combinational logic circuits as input values to the plurality of sequential logic circuits through a feedback line in synchronization with the scan shift clock. Here, when the source control signal is at a first logic level (e.g., a logic high level), the first selector 150 may output first input values INPUT1 that are output values of the scan chain circuit. In addition, when the inversion control signal is at the second logic level (e.g., a logic low level), the second selector 160 may output first input values INPUT1 that are output values of the scan chain circuit received from the first selector 150 to the scan chain circuit. At this time, when the number of inverter circuits included in the scan test path of the scan chain circuit is an even number, the control circuitry 100 may output an inversion control signal having a second logic level (e.g., a logic low level).

Also, the plurality of sequential logic circuits may store first input values at a second time point at which the first cycle of the scan shift clock passes. Here, the first input values may be the same as the first output values of the plurality of combinational logic circuits at the first time point.

Also, after the second time point, the control circuitry 100 may output a scan enable SE, which has a first logic level (e.g., a logic low level), to the scan chain circuit. The plurality of combinational logic circuits may operate on the first input values stored in the plurality of sequential logic circuits as input values.

When the inversion control signal is at the first logic level (e.g., a logic high level), the second selector 160 may output to the scan chain circuit fourth input values obtained by inverting the first input values INPUT1, which are output values of the scan chain circuit received from the first selector 150. At this time, when the number of inverter circuits included in the scan test path of the scan chain circuit is an odd number, the control circuitry 100 may output an inversion control signal having a first logic level (e.g., a logic high level). Also, the plurality of sequential logic circuits may sequentially receive fourth input values and store fifth input values at a second time point. In this case, the fifth input values may be the same as the first output values of the first time points of the plurality of combinational logic circuits.

An operating method of the control circuitry 100 so that the scan chain circuit included in the IP block performs a restore operation is described in detail.

The total shift count value, the inversion control value, and the source control value stored in the register 120 may be changed by a request for a restore operation.

The control module 110 may output signals instructing performance of the operation of the shift counter 130, the clock gator 140, the first selector 150, the second selector 160, the third selector 170 and the scan chain circuit based on the total shift count value, the inverted value, and the source control value.

The control module 110 may output, to the clock gator 140, a clock gating signal instructing the clock gator 140 to gate the function clock in response to a request for a save operation or a resume operation.

The control module 110 may provide the changed total shift count value to the shift counter 130. In this case, the shift counter 130 may decrease the total shift count value by once every time one cycle of the scan shift clock passes.

The first selector 150 may output second input values INPUT2 that are input values of a storage device in response to a source control signal based on a source control value instructing performance of a restore operation.

The second selector 160 may output input values or output inverted input values in response to an inversion control signal based on the changed inversion control value. The second selector 160 may output second input values INPUT2 of the storage device or inverted second input values of the storage device in response to the inversion control signal. The inverted second input values may be generated by inverting the second input values INPUT2.

Thereafter, the control module 110 may output a scan enable signal SE indicating a scan shift operation to the scan chain circuit and output a clock change request indicating a scan shift operation to the third selector 170.

The third selector 170 may output a scan shift clock in response to a clock change request indicating output of the scan shift clock. Here, the clock gator 140 may terminate clock gating in response to a clock gating signal instructing the control module 110 to terminate clock gating.

A plurality of sequential logic circuits included in the scan chain circuit may perform a scan shift operation on the second input values INPUT2 or the inverted second input values in response to the scan enable signal SE instructing the scan shift operation.

The scan chain circuit may sequentially store the input second input values INPUT2 or the inverted second input values in a plurality of sequential logic circuits in synchronization with the scan shift clock.

The scan chain circuit may perform a scan shift operation by as much as the second cycle of the scan shift clock and store third input values at a third time point at which the second cycle of the scan shift clock passes. Here, a third input value stored in the sequential logic circuits at a third time point occurring when the second cycle of the scan shift clock passes may be the same as the second input value.

That is, the data values stored at the third time point, which is the end time point of the scan shift operation in each sequential logic circuit connected to the plurality of combinational logic circuits, and the data values provided from the storage device are the same.

In an embodiment, when the total shift count value of the shift counter 130 becomes 0, the shift counter 130 may provide the counting result value to the control module 110. In this case, the counting result value may be a value indicating that the counting operation has ended. The control module 110 may output a clock gating signal to the clock gator 140 so that the clock gator 140 gates the scan shift clock based on the counting result value.

Here, the total shift count value may be the number of scan shift operations so that data values provided to the storage device and data values stored in a plurality of sequential logics after the scan shift operation are the same. Also, the total shift count value may correspond to the number of cycles of the clock included in the second cycle of the above-described scan shift clock.

The clock gator 140 may gate the scan shift clock in response to the clock gating signal based on the counting result value.

Thereafter, the control module 110 may output a scan enable signal SE indicating a normal operation to the scan chain circuit and output a clock change request indicating output of the function clock to the third selector 170. Also, the control module 110 may output a response indicating that the restore operation has been completed.

The third selector 170 may output a function clock in response to a clock change request indicating output of the function clock. Here, the clock gator 140 may terminate clock gating in response to a clock gating signal instructing the control module 110 to terminate clock gating.

The plurality of sequential logic circuits included in the scan chain circuit may input third input values to the plurality of combinational logic circuits in response to the scan enable signal SE indicating a normal operation. Third input values may be transmitted along a data path, and an original function of an IP block may be performed. Here, the second input values may be states of internal circuits of the IP block stored at a certain time point.

Also, since the third input values are the same as the second input values, the inventive concept has the effect of loading the IP block with the state of an internal circuit of the IP block stored at a certain time point in an external device.

In an embodiment, when the scan enable signal SE is at the second logic level (e.g., a logic high level) and the source control signal is at the second logic level (e.g., a logic low level), the plurality of sequential logic circuits may sequentially receive second input values as input values to the plurality of sequential logic circuits from the storage device in synchronization with the scan shift clock through the first output values feedback line. Here, when the source control signal is at the second logic level (e.g., a logic low level), the first selector 150 may output second input values INPUT2 that are input values of the storage device.

Also, the plurality of sequential logic circuits may store third input values at a third time point at which the second cycle of the scan shift clock passes. Here, the third input values may be the same as the second input values received from the storage device.

Also, after the third time point, the control circuitry 100 may output a scan enable SE, which is a first logic level (e.g., a logic low level), to the scan chain circuit. The plurality of combinational logic circuits may operate on the third input values stored in the plurality of sequential logic circuits as input values.

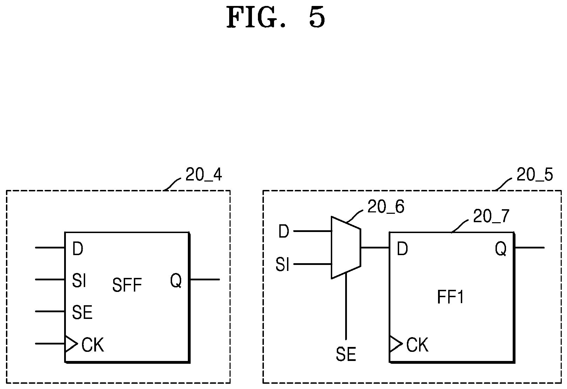

FIG. 5 is a diagram for explaining a sequential logic circuit included in a scan chain circuit according to an embodiment.

Referring to FIG. 5, a first scan flip-flop 20_4 and a second scan flip-flop 20_5 are illustrated.

The first scan flip-flop 20_4 may receive a data signal D, a scan input signal SI, or a scan enable signal SE and output an output signal Q according to a clock signal CK.

The scan enable signal SE may indicate a normal operation or a scan shift operation according to a logic level. For example, the scan enable signal SE may indicate one of the normal operation and the scan shift operation.

When the scan enable signal SE indicates a normal operation, the first scan flip-flop 20-4 may perform a normal operation of latching the data signal D and providing an output signal Q. That is, the data signal D may be transmitted along the data path described with reference to FIG. 2.

When the scan enable signal SE indicates a scan shift operation, the first scan flip-flop 20_4 may latch the scan input signal SI and perform a scan shift operation providing an output signal Q. That is, data of the scan input signal SI may be transmitted along the scan in path or scan out path described with reference to FIG. 2.

The second scan flip-flop 20_5 may be an embodiment of the first scan flip-flop 20_4. The second scan flip-flop 20_5 may include a selector 20_6 and a flip-flop 20_7.

The selector 20_6 may output a data signal D or a scan input signal SI to the flip-flop 20_7 according to the logic level of the scan enable signal SE. For example, when the scan enable signal SE indicates a normal operation, the data signal D may be output to the flip-flop 20_7. In addition, when the scan enable signal SE indicates a scan shift operation, the scan input signal SI may be output to the flip-flop 20_7.

The second scan flip-flop 20_5 may provide an output signal Q by latching the output value of the selector 20_6 according to the clock signal CK.

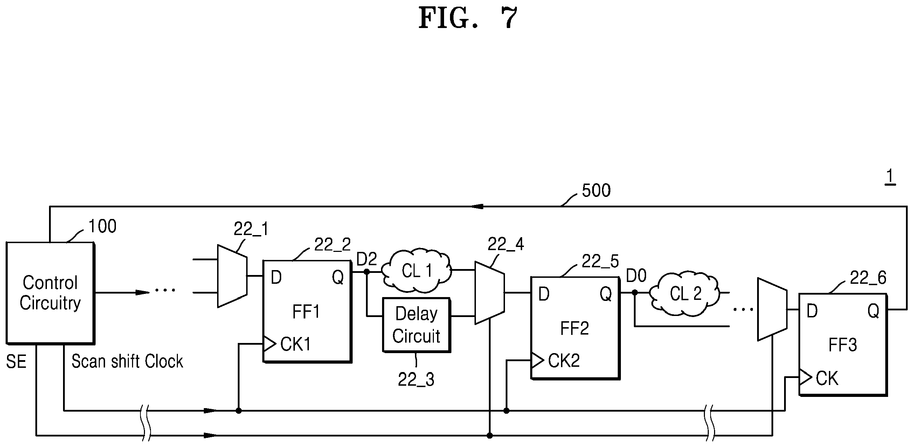

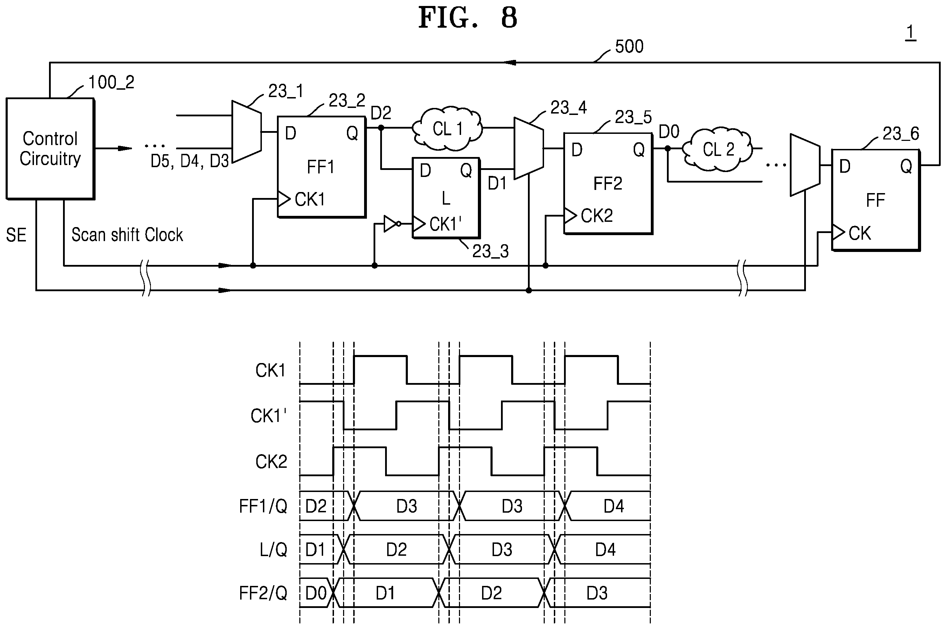

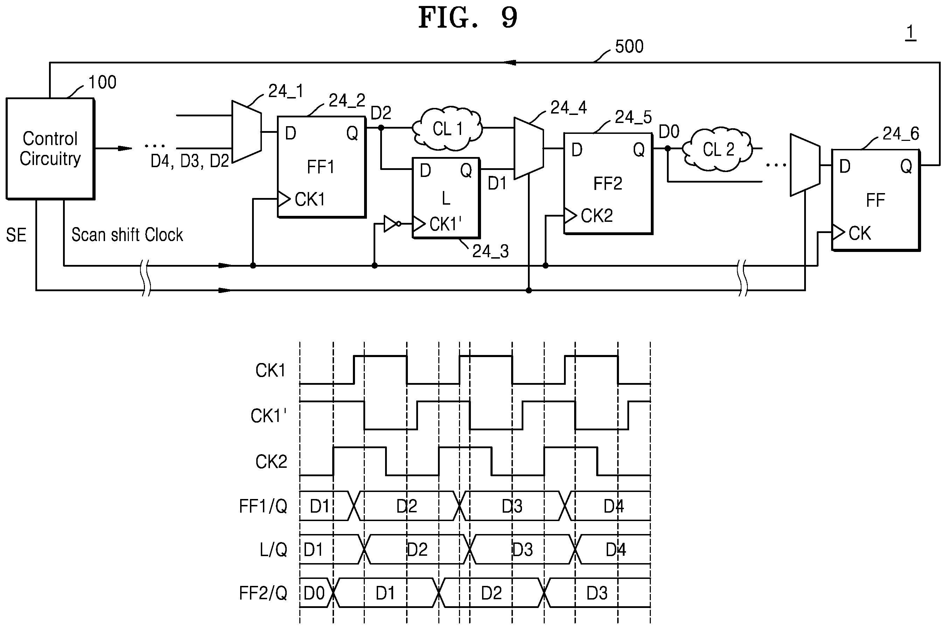

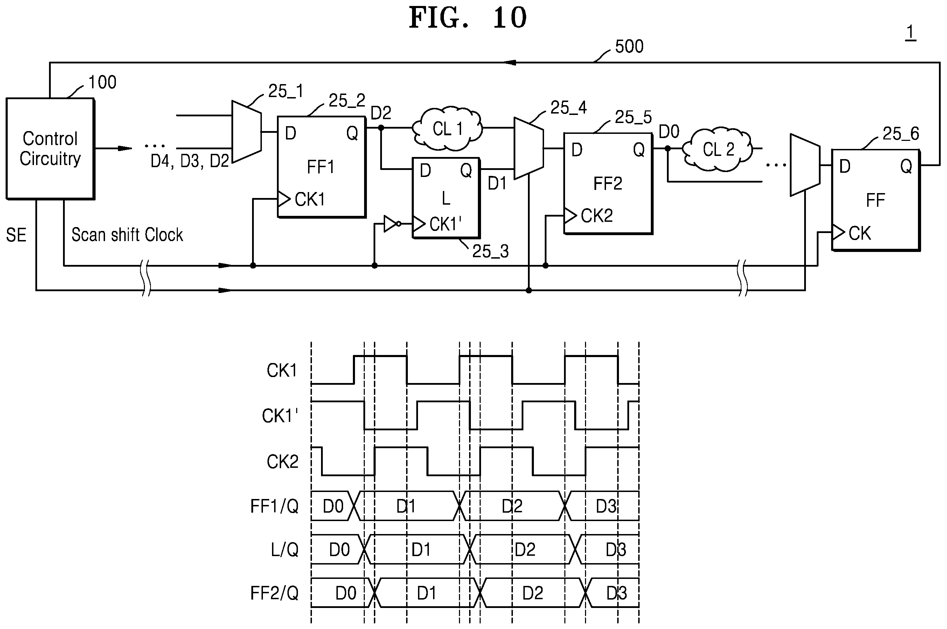

FIG. 6 is a diagram illustrating an example of a scan chain circuit according to an embodiment. FIG. 7 is a diagram illustrating an example of a scan chain circuit according to an embodiment. FIG. 8 is a diagram illustrating an example of a scan chain circuit according to an embodiment. FIG. 9 is a diagram illustrating an example of a scan chain circuit according to an embodiment. FIG. 10 is a diagram illustrating an example of a scan chain circuit according to an embodiment.

A method of determining a total shift count value will be described with reference to FIGS. 6 to 10.

The control circuitry 100 may set or adjust a preset number of cycles among consecutive cycles included in the scan shift clock to the scan chain circuit based on the total shift count value. Here, the cycle represents one cycle of the clock signal.

The total shift count value may be the number of scan shift operations so that in the save operation, data values stored in the plurality of sequential logics before the scan shift operation and data values stored in the plurality of sequential logics after the scan shift operation are the same. The total shift count value may correspond to the number of cycles included in the first cycle or the number of cycles included in the second cycle of the above-described scan shift clock.

That is, since the output values of the scan chain circuit are input back to the scan chain circuit through the feedback line, the output values of the scan chain circuit may be the number of cycles of the scan shift clock to be put in place.

Referring to FIG. 6, the integrated circuit 1 may include a control circuitry 100, a first combinational logic circuit CL1, a second combinational logic circuit CL2, an IP block including a first flip-flop 21_1, a second flip-flop 21_2, and a third flip-flop 21_3, and a feedback line 500.

In the first flip-flop 21_1, the second flip-flop 21_2, and the third flip-flop 21_3, when the scan shift clock CK transitions from a logic low level to a logic high level, a data input signal D may be latched in the flip-flop and output as a data output signal Q.

The integrated circuit 1 outputs the state of the internal circuit of the IP block stored at the first time point, and inputs the state of the internal circuit output through the feedback line 500 to the scan chain circuit, thereby performing a resume operation. That is, data may be transmitted from a scan out path to a scan in path through a feedback line.

Here, it is assumed that the first flip-flop 21_1 stores the second data D2 at the first time point when the provision of the clock function to the scan chain circuit has finished, and the second flip-flop 21_2 stores first data D1 and the third flip-flop 21_3 stores 0th data D0.

The control circuitry 100 may provide a scan enable signal SE and a scan shift clock instructing performance of a scan shift operation to a scan chain circuit. Accordingly, when one cycle of the scan shift clock passes, one piece of data may be moved from the previous flip-flop to the next flip-flop.

Also, the control circuitry 100 may provide a scan shift clock to the scan chain circuit based on the total shift count value. Herein, the control circuitry 100 may set a preset number of cycles among consecutive cycles included in the scan shift clock provided to the scan chain circuit based on the total shift count value. For example, the control circuitry 100 may adjust the scan shift clock by as many cycles as the number of cycles corresponding to the total shift count value and provide the adjusted scan shift clock to the scan chain circuit. At this time, the cycle represents one cycle of the clock signal.

Also, the control circuitry 100 may determine a total shift count value based on the number of shift elements included in the scan chain circuit. In addition, the total shift count value may correspond to the number of cycles included in the first cycle or the number of cycles included in the second cycle of the above-described scan shift clock. Here, the shift element is an element that is included in the scan chain circuit and performs a scan shift operation. For example, the shift element may perform a scan shift operation for each cycle of the shift clock in synchronization with the scan shift clock. Also, the shift element may include, for example, a flip-flop, a latch added for timing, or internal storage elements used for peripheral scan of a memory circuit.

In an embodiment, the control circuitry 100 determines the total shift count value based on the number of flip-flops included in the scan chain circuit.

For example, referring to the timing diagram of FIG. 6, the first flip-flop 21_1 initially may store the second data D2, the second flip-flop 21_2 may store first data D1, and the third flip-flop 21_3 may store 0th data D0. When the first cycle of the scan shift clock passes, the first data D1 stored in the second flip-flop 21_2 may be stored in the third flip-flop 21_3. In addition, when the second cycle of the scan shift clock passes, the first data D1 stored in the third flip-flop 21_3 may be stored in the first flip-flop 21_1 through the feedback line 500. Also, when the third cycle of the scan shift clock passes, the first data D1 stored in the first flip-flop 21_1 may be stored in the second flip-flop 21_2. That is, it may be seen that the first data D1 stored in the second flip-flop 21_2 at the first time point stores the scan shift clock in the second flip-flop 21_2 again through the feedback line 500 at the second time point at which three cycles have passed. Here, the total shift count value may be 3.

Referring to FIG. 7, the integrated circuit 1 includes a control circuitry 100, a first combinational logic circuit CL1, a second combinational logic circuit CL2, a first selector 22_1, and a first flip-flop 22_2, a delay circuit 22_3, a second selector 22-4, an IP block including a second flip-flop 22_5 and a third flip-flop 22_6, and a feedback line 500.

The scan chain circuit included in the integrated circuit 1 may include the delay circuit 22_3. The delay circuit 22_3 may be connected to an input terminal of the scan flip-flop to delay the scan input signal SI. When the path through which the scan shift clock provided to the scan flip-flops (or the distance along which the scan shift clock passes) is different, skew between the different clock paths may cause the clock signal not to be presented to the scan flip-flops as expected by the design. To mitigate this, the delay circuit 22_3 may adjust the input timing of the scan input signal SI.

For example, the delay circuit 22_3 may be connected to the input terminal of the second selector 22_4 included in the second scan flip-flop to delay the scan input signal SI.

In an embodiment, the delay circuit 22_3 may be implemented in the form of a lockup latch, flip-flop or inverter circuit.

The control circuitry 100 may adjust a preset number of cycles among consecutive cycles included in the scan shift clock based on the total shift count value and provide the adjusted scan shift clock to the scan chain circuit. Here, the cycle represents one cycle of the clock signal.

Also, the total shift count value may be determined based on the number of flip-flops included in the scan chain circuit, the number of flip-flops excluded from shift operation counting, and the number of delay circuits included in shift operation counting.

In an embodiment, the control circuitry 100 determines a total shift count value based on the number of flip-flops included in the scan chain circuit, the number of flip-flops excluded from shift operation counting, and the number of delay circuits included in shift operation counting.

That is, the control circuitry 100 may determine the total shift count value based on the number of flip-flops included in the scan chain circuit and a compensation offset. Here, the compensation offset may be determined based on the number of flip-flops excluded from shift operation counting and the number of delay circuits included in shift operation counting.

The total shift count value may be determined by Equation 1 below. [Equation 1] $Total ⋅ Shift ⋅ Count ⋅ Value = {N}_{FF} - {N}_{Uncount _ FF} + {N}_{Count _ DC}$

In Equation 1, Total Shift Count Value represents the total shifter count value, N_FF represents the number of flip-flops included in the scan chain circuit, N_Uncount_FF represents the number of flip-flops excluded from shift operation counting, and N_Count_DC represents the number of delay circuits included in shift operation counting.

Referring to FIG. 8, a delay circuit included in shift operation counting is described, and referring to FIG. 9, a delay circuit excluded from shift operation counting is described, and referring to FIG. 10, the flip-flop excluded from counting the shift operation is described.

Referring to FIG. 8, the integrated circuit 1 may include a control circuitry 100_2, a first combinational logic circuit CL1, a second combinational logic circuit CL2, a first selector 23_1, a first flip-flop 23_3, a delay circuit 23_3 implemented as a lockup latch, a second selector 23_4, an IP block including a second flip-flop 23_5 and a third flip-flop 23_6, and a feedback line 500.

The scan chain circuit included in the integrated circuit 1 may include a delay circuit implemented as the lockup latch 23_3. Here, the lockup latch 23_3 may operate in synchronization with a flip-flop clock signal CK1 connected to the input terminal D of the lockup latch and an inverted clock signal CK1'. In addition, the lockup latch 23_3 may be implemented to latch the input data D by triggering the low logic level of the input clock signal CK1'.

Referring to the timing diagram of FIG. 8, the first flip-flop 23_2 initially stores the second data D2, the lockup latch 23_3 stores the first data D1, and the second flip-flop 23_5 stores 0th data D0. In addition, it may be seen that input timings of the first scan shift clock signal CK1, the inverted first scan shift clock signal CK1', and the second scan shift clock signal CK2 are different from each other due to clock skew.

Looking at the flow of the second data D2, after being latched in the first flip-flop 23_2, the second data D2 is latched in the lockup latch 23_3 by the low logic level of the inverted first scan shift clock CK1'. After being latched in the lockup latch 23_3, the second data D2 is latched in the second flip-flop 23_5 by the rising edge of the second scan shift clock CK2.

If the scan shift clock passes one cycle, the first flip-flop 23_2 latches the third data D3, the lockup latch 23_3 latches the second data D2, and the second flip-flop 23_5 latches the first data D1. If the scan shift clock passes two cycles, the first flip-flop 23_2 latches the fourth data D4, the lockup latch 23_3 latches the third data D3, and the second flip-flop 23_5 latches the second data D2. The lockup latch 23_3 at this time may be included in the shift operation counting.

Referring to FIG. 9, the integrated circuit 1 may include a control circuitry 100, a first combinational logic circuit CL1, a second combinational logic circuit CL2, a first selector 24_1, and a first flip-flop 24_2, a delay circuit 24_3 implemented as a lockup latch, a second selector 24_4, an IP block including a second flip-flop 24_5 and a third flip-flop 24_6, and a feedback line 500.

The scan chain circuit included in the integrated circuit 1 may include a delay circuit implemented as the lockup latch 24_3. Here, the lockup latch 24_3 may operate in synchronization with a flip-flop clock signal CK1 connected to the input terminal D of the lockup latch and an inverted clock signal CK1'. In addition, the lockup latch 24_3 may be implemented to latch the input data D by triggering the low logic level of the input clock signal CK1'.

Referring to the timing diagram of FIG. 9, the first flip-flop 24_2 and the lock-up latch 24_3 initially store the first data D1, and the second flip-flop 24_5 stores the 0th data D0. In addition, it may be seen that input timings of the first scan shift clock signal CK1, the inverted first scan shift clock signal CK1', and the second scan shift clock signal CK2 are different from each other due to clock skew.

Looking at the flow of the first data D1, after being latched in the first flip-flop 24_2 and the lock-up latch 24_3, it may be seen that the first data D1 is latched in the second flip-flop 24_5 by the rising edge of the second scan shift clock CK2. Similarly, looking at the flow of the second data D2 latched in the first flip-flop 24_2 after the first data D1, after being latched in the first flip-flop 24_2 and the lock-up latch 24_3, it may be seen that the second data D2 is latched in the second flip-flop by the rising edge of the second scan shift clock CK2.

When one cycle of the scan shift clock passes, the first flip-flop 24_2 and the lock-up latch 24_3 latch the second data D2, and the second flip-flop 24_5 latches the first data D1. If the scan shift clock passes two cycles, the first flip-flop 24_2 and the lock-up latch 24_3 latch third data D3, and the second flip-flop 24_5 latches second data D2. The lockup latch 24_3 at this time may be excluded from the shift operation counting.

As seen in FIGS. 8 and 9, based on the timing of the clock signal input to the lockup latch and the flip-flops, the lockup latch may be included in the shift operation counting.

Referring to the timing diagram of FIG. 8, when the timing of the clock signal input to the lockup latch 23_3 is slower than the timing of the clock signal input to the first flip-flop 23_2 connected to the input terminal of the lockup latch 23_3, and the timing of the clock signal input to the second flip-flop 23_5 configured to be connected to the output terminal of the lockup latch is slower than that of the clock signal, the lockup latch 23_3 may be included in the shift operation counting.

Referring to the timing diagram of FIG. 9, when the timing of the clock signal input to the lockup latch 24_3 is faster than the timing of the clock signal input to the first flip-flop 24_2 connected to the input terminal of the lockup latch 24_3, and the timing of the clock signal input to the second flip-flop 24_5 configured to be connected to the output of the lockup latch 24_3 is slower than the timing of the clock signal, the lockup latch 24_3 may be excluded from the shift operation counting.

Referring to FIG. 10, the integrated circuit 1 may include a control circuitry 100, a first combinational logic circuit CL1, a second combinational logic circuit CL2, a first selector 25_1, and a first flip-flop 25_2, a delay circuit 25_3 implemented as a lockup latch, a second selector 25_4 an IP block including a second flip-flop 25_5 and a third flip-flop 25_6, and a feedback line 500.

The scan chain circuit included in the integrated circuit 1 may include a delay circuit implemented as a lockup latch 25_3. Here, the lockup latch 25_3 may operate in synchronization with a flip-flop clock signal CK1 connected to the input terminal D of the lockup latch and an inverted clock signal CK1'. In addition, the lockup latch 25_3 may be implemented to latch the input data D by triggering the low logic level of the input clock signal CK1'.

Referring to the timing diagram of FIG. 10, the first flip-flop 25_2, the lock-up latch 25_3, and the second flip-flop 25_5 may initially store 0th data D0. In addition, it may be seen that input timings of the first scan shift clock signal CK1, the inverted first scan shift clock signal CK1', and the second scan shift clock signal CK2 are different from each other due to clock skew.

When one cycle of the scan shift clock passes, the first flip-flop 25_2, the lock-up latch 25_3, and the second flip-flop 25_5 latch the first data D1. If the scan shift clock passes two cycles, the first flip-flop 25_2 and the lock-up latch 25_3 latch third data D3, and the second flip-flop 25_5 latches second data D2. The second flip-flop 25_2 at this time may be excluded from counting the shift operation.

Based on the lockup latch and the timing of the clock signal input to the flip-flops, the flip-flops may be excluded from counting shift operations.

Referring to the timing diagram of FIG. 10, the timing of the clock signal input to the second flip-flop 25_5 is slower than the timing of the clock signal input to the first flip-flop 25_2, and is slower than the timing of the clock signal input to the lockup latch 25_3, the second flip-flop 25_5 may be excluded from counting the shift operation.

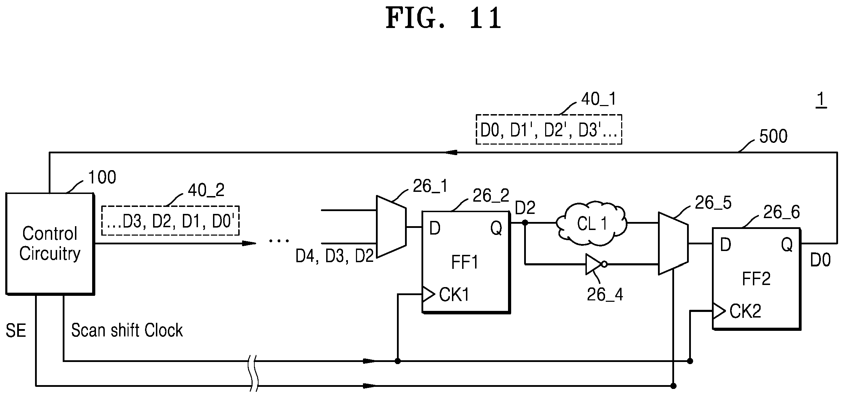

FIG. 11 is a diagram illustrating an example of a scan chain circuit according to an embodiment.

Referring to FIG. 11, the integrated circuit 1 may include a control circuitry 100, a first combinational logic circuit CL1, a first selector 26_1, a first flip-flop 26_2, a delay circuit 26_4 implemented as an inverter circuit, a second selector 26_5, an IP block including the second flip-flop 26_6, and the feedback line 500.

The scan chain circuit may include a delay circuit 26_4 implemented as an inverter circuit on the scan test path.

Referring to FIG. 11, it may be seen that initially, the first flip-flop 26_2 latches the first data D1 and the second flip-flop latches the 0th data D0. The scan chain circuit may sequentially provide output values to the control circuitry 100 through the feedback line 500 in synchronization with the scan shift clock. Also, in response to a resume operation request, the control circuitry 100 may synchronize output values input through the feedback line 500 with the scan shift clock and sequentially provide the synchronized results to the scan chain circuit.

At this time, the control circuitry 100 may sequentially provide fourth input values, which are inverted values of the input values received through the feedback line 500, to the scan chain circuit based on the number of delay circuits implemented with inverter circuits.

In the embodiment, when the number of delay circuits implemented as inverter circuits on the scan test path is even, the control circuitry 100 may sequentially provide the input values received through the feedback line 500 to the scan circuit as they are. When the number of delay circuits implemented as inverter circuits on the scan test path is odd, the control circuitry 100 may sequentially provide the fourth input values, which are the inverted values of input values received through the feedback line 500 to the scan circuit as they are.

For example, referring to FIG. 11, it may be seen that one delay circuit 26_4 implemented as an inverter circuit is included in the scan test path. At this time, the data 40_1 output to the scan out path may sequentially include 0th data D0, inverted first data D1', inverted second data D2', and inverted third data D3'. To make the state of the internal circuit of the IP block before the save operation the same as the state of the internal circuit of the IP block after the save operation, the control circuitry 100 may sequentially provide the input values 40_2, which are inverted values of the input values 40_1 received through the feedback line 500, to the scan chain circuit. Here, the input values 40_2 that are inverted values may include inverted 0th data D0', first data D1, second data D2, and third data D3.

In the embodiment, if the number of inverter circuits included in the scan test path of the scan chain circuit is odd, the control circuitry may sequentially provide fourth input values, which are inverted values of the input values, to the scan chain circuit. The scan chain circuit may perform a scan shift operation on the fourth input values by the first cycle of the scan shift clock and store the fifth input values at a second time point at which the first cycle of the scan shift clock passes. Here, the fifth input values stored in the sequential logic circuits at the second time point at which the first cycle of the scan shift clock passed may be the same as the first output value stored in the sequential logic circuits at the first time point. In addition, the second time point may be a time point at which the cycle of the scan shift clock passes so that the state of the internal circuit of the IP block before the save operation and the state of the internal circuit of the IP block after the save operation are the same. That is, this may be a time point at which the first cycle of the scan shift clock passes so that values stored in the plurality of sequential logic circuits after the save operation are the same as values stored in the plurality of sequential logic circuits before the save operation.

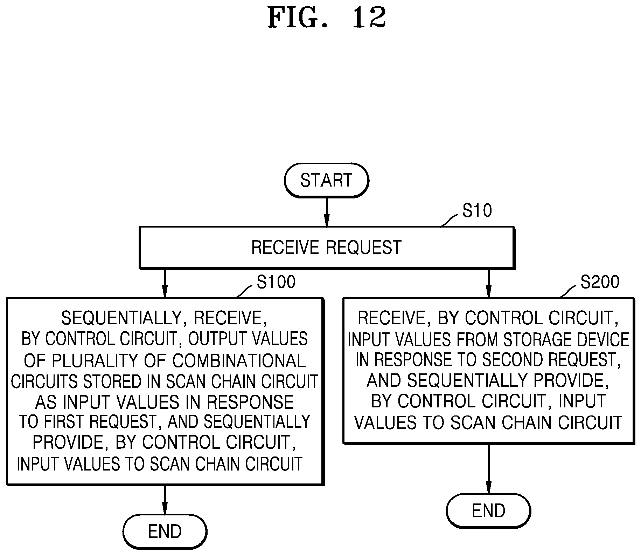

FIG. 12 is a flowchart illustrating a method of operating an integrated circuit, according to an embodiment.

Referring to FIG. 12, the integrated circuit receives a request in operation S10. In this case, the request may include at least one of a save request indicating a save operation, a resume request indicating a resume operation, and a restore request indicating a restore operation. Also, the integrated circuit may include a scan chain circuit, a storage device, and a control circuitry. The request may be an electronic signal that includes information indicating the type of request and information for processing the request.

Depending on the request received in operation S10, the method may proceed to operation S100 or operation S200.

In operation S100, the integrated circuit causes the control circuitry to receive output values of a plurality of combinational logic circuits stored in the scan chain circuit as input values in response to the first request, and causes the control circuitry to sequentially provide the input values to the scan chain circuit. Here, the first request may be a save request or a resume request.

In operation S200, the integrated circuit causes the control circuitry to receive input values from the storage device in response to the second request, and causes the control circuitry to sequentially provide the received input values to the scan chain circuit. Here, the second request may be a restore request.

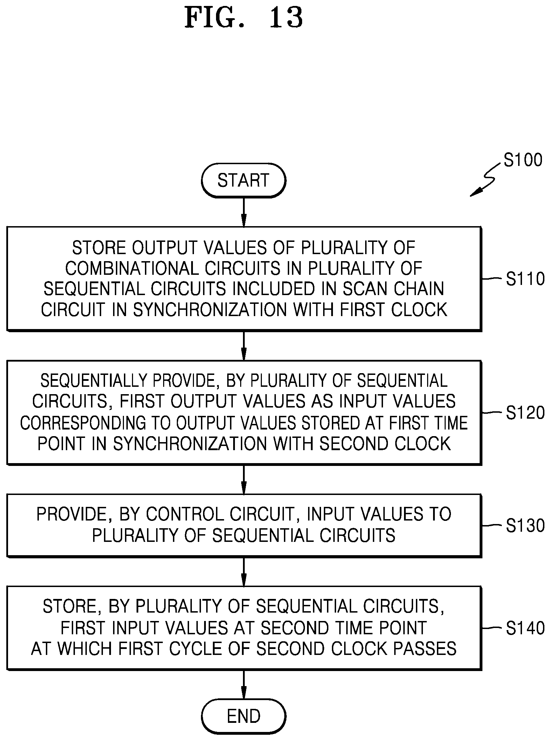

FIG. 13 is a flowchart illustrating a method of operating an integrated circuit, according to an embodiment.

Referring to FIG. 13, operation S100 includes operation S110, operation S120, operation S130, and operation S140.

In operation S110, the integrated circuit stores the output values of the plurality of combinational circuits in the plurality of sequential circuits included in the scan chain circuit in synchronization with the first clock. Here, the first clock may be a function clock. For example, the integrated circuit may store the output values at a first time point when a rising or falling edge of the first clock occurs.

In operation S120, the integrated circuit synchronizes with the second clock so that the plurality of sequential circuits sequentially provide first output values corresponding to the output values stored at the first time point to the control circuitry as input values. Here, the second clock may be a scan shift clock. For example, the sequential circuits may provide the output values stored at the first time point, at a second time point when a rising or falling edge of the first clock occurs, where the second time point occurs after the first time point.

In operation S130, the integrated circuit causes the control circuitry to sequentially provide input values to the plurality of sequential circuits.

In operation S140, the integrated circuit causes a plurality of sequential circuits to store first input values at the second time point at which the first cycle of the second clock passes. Here, the first input values may be the same as the first output values.

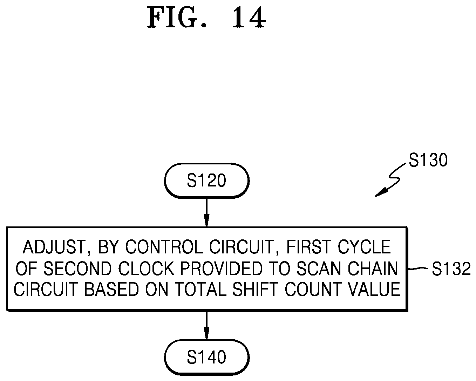

FIG. 14 is a flowchart illustrating a method of operating an integrated circuit, according to an embodiment.

Referring to FIG. 14, operation S130 may include operation S132.

In operation S130, the control circuit adjusts the first cycle of the second clock it provides to the scan chain circuit based on the total shift count value. Here, the total shift count value may be determined based on the number of flip-flops included in the plurality of sequential logic circuits and the compensation offset.

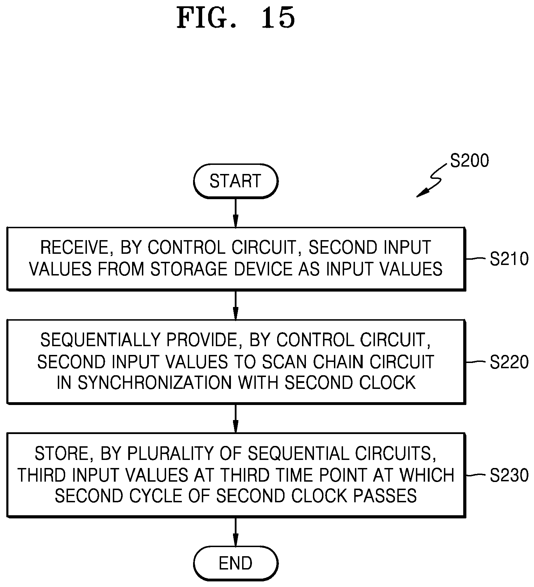

FIG. 15 is a flowchart illustrating a method of operating an integrated circuit, according to an embodiment.

Referring to FIG. 15, operation S200 includes operation S210, operation S220, and operation S230.

In operation S210, the integrated circuit causes the control circuitry to receive second input values as input values from the storage device.

In operation S220, the integrated circuit causes the control circuitry to sequentially provide the second input values to the scan chain circuit in synchronization with the second clock. Here, the second clock may be a scan shift clock. For example, the control circuitry may provide the second input values when a rising or falling edge of the second clock occurs.

In operation S230, the integrated circuit causes the plurality of sequential logic circuits to store third input values at a third time point at which the second cycle of the second clock passes. Here, the third input values may be the same as the second input values. For example, the integrated circuit may store the third input values at third time point when a rising or falling edge of the second clock occurs.

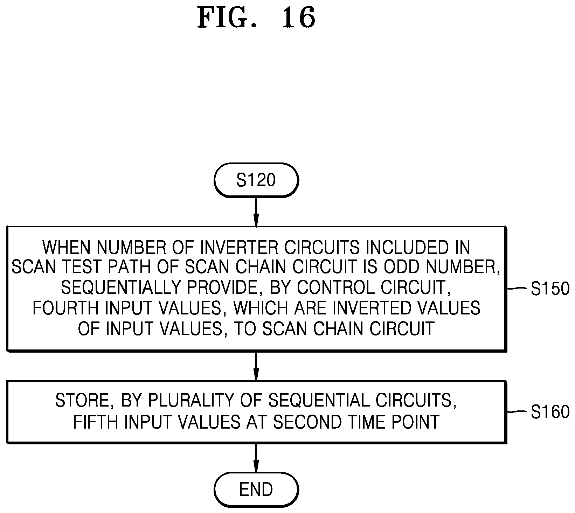

FIG. 16 is a flowchart illustrating a method of operating an integrated circuit, according to an embodiment.

Referring to FIG. 16, operation S100 may further include operations S150 and S160.

In operation S150 after operation S120, when the number of inverter circuits included in the scan test path of the scan chain circuit is odd, the control circuitry sequentially provides fourth input values, which are inverted values of the input values, to the scan chain circuit.

In operation S160, the integrated circuit causes a plurality of sequential logic circuits to store fifth input values at a second time point. The second time point may occur at a time when the first cycle of the second clock passes. Here, the fifth input values may be the same as the first output values.

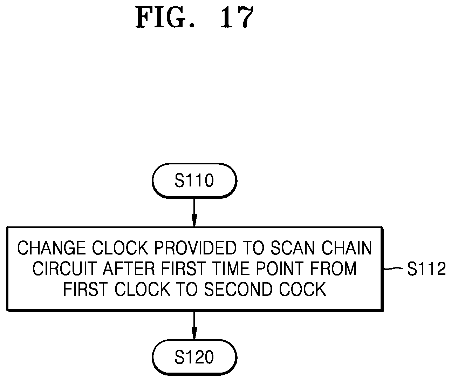

FIG. 17 is a flowchart illustrating a method of operating an integrated circuit, according to an embodiment.

Referring to FIG. 17, operation S100 may include operation S1112.

In operation S112 after operation S110, the integrated circuit changes the clock provided to the scan chain circuit from the first clock to the second clock after the first time point. In an embodiment, the first clock is a function clock, and the second clock is a scan shift clock. Operation S120 may proceed after operation S112.

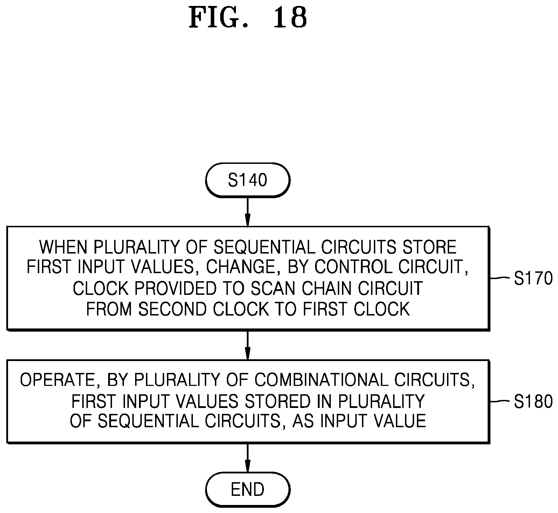

FIG. 18 is a flowchart illustrating a method of operating an integrated circuit, according to an embodiment.

Referring to FIG. 18, step S100 may further include operations S170 and S180.

In operation S170 after operation S140, when the plurality of sequential circuits store the first input values, the integrated circuit causes the control circuitry to change the clock provided to the scan chain circuit from the second clock to the first clock. In an embodiment, the first clock is a function clock, and the second clock is a scan shift clock.

In operation S180, the integrated circuit causes a plurality of combinational circuits to operate the first input values stored in the plurality of sequential circuits as input values.

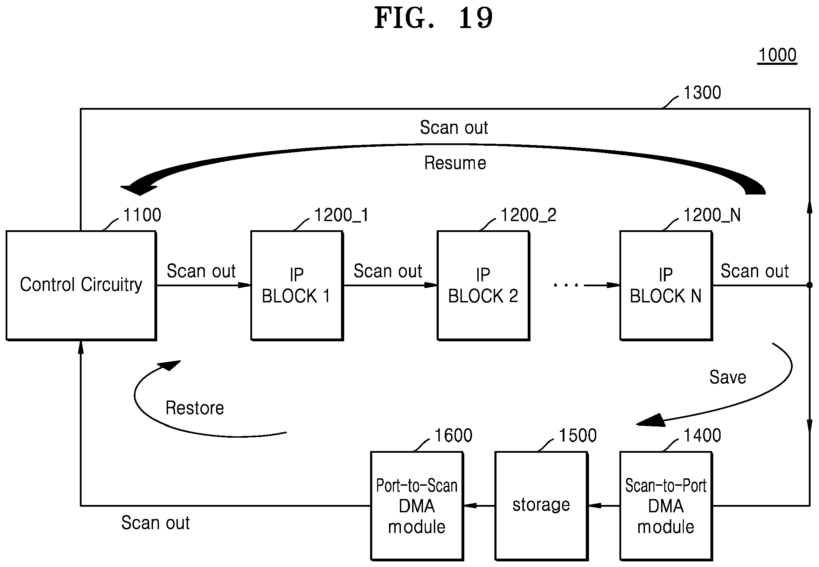

FIG. 19 is a block diagram illustrating an integrated circuit according to an embodiment.

Referring to FIG. 19, an integrated circuit 1000 includes control circuitry 1100, a first IP block 1200_1, a second IP block 1200_2, ... , an Nth IP block 1200_N, a feedback line 1300, a scan-to-port DMA module 1400 (e.g., a first DMA circuit), a storage device 1500, and a port-to-scan DMA module 1600 (e.g., a second DMA circuit). Here, each of the first IP block 1200_1, the second IP block 1200_2, ... , the Nth IP blocks 1200_N may include the scan chain circuit 200 and the plurality of combinational logic circuits 300 shown in FIG. 1.

In addition, the scan chain circuits included in the first IP block 1200_1, the second IP block 1200_2, ... , the Nth IP block 1200_N may be connected to each other to form one scan chain circuit, and the scan chain circuit may transmit data through a scan in path or a scan out path.

In addition, the IP blocks 1200_1, 1200_2, ..., 1200_N may perform normal operations in synchronization with the function clock or perform scan shift operations in synchronization with the scan shift clock.

Here, function clocks provided to each of the first IP block 1200_1, the second IP block 1200_2, ... , the Nth IP blocks 1200_N may be different from each other. For example, the control circuitry 1100 may provide a first function clock to the first IP block 1200_1, and the control circuitry 1100 may provide a second function clock different from the first function clock to the second IP block 1200_2.

Also, the control circuitry 1100 may provide the same scan shift clock to IP blocks through one scan shift clock path. Here, the first IP block 1200_1, the second IP block 1200_2, ... , scan shift clocks provided to each of the Nth IP blocks 1200_N may be the same. For example, the control circuitry 1100 may provide a first function clock to the first IP block 1200_1 through one scan shift clock path, and the control circuitry 1100 may provide the second function clock identical to the first function clock to the second IP block 1200_2.

The control circuitry 1100 may control one scan chain circuit configured by connecting the scan chain circuits to each other included in the first IP block 1200_1, the second IP block 1200_2, and the Nth IP block 1200_N to perform the save operation, resume operation, and restore operation described with reference to FIGS. 1 to 18.

During the resume operation, the feedback line 1300 may transmit the internal circuit states of the first IP block 1200_1, the second IP block 1200_2, ... the Nth IP block 1200_N of the first time point output to the scan out path to the control circuitry 1100. At this time, the control circuitry 1100 may provide the internal circuit states of the first IP block 1200_1, the second IP block 1200_2, ... , the Nth IP block 1200_N at the first time point to the above-described scan chain circuit through a scan in path.

During the save operation, the scan-to-port DMA module 1400 may transfer the internal circuit states of the first IP block 1200_1, the second IP block 1200_2, ... , the Nth IP block 1200_N at the first time point output through the scan out path to the storage device 1500.

During the restore operation, the port-to-scan DMA module 1600 may receive the internal circuit states of the first IP block 1200_1, the second IP block 1200_2, ... , the Nth IP block 1200_N at the third time point from the storage device, and provide the internal circuit states of the first IP block 1200_1, the second IP block 1200_2, ... , the Nth IP block 1200_N at the third time point to the control circuitry 1100. At this time, the control circuitry 1100 may provide the internal circuit states of the first IP block 1200_1, the second IP block 1200_2, ... , the Nth IP block 1200_N at the third time point to the above-described scan chain circuit through a scan in path.

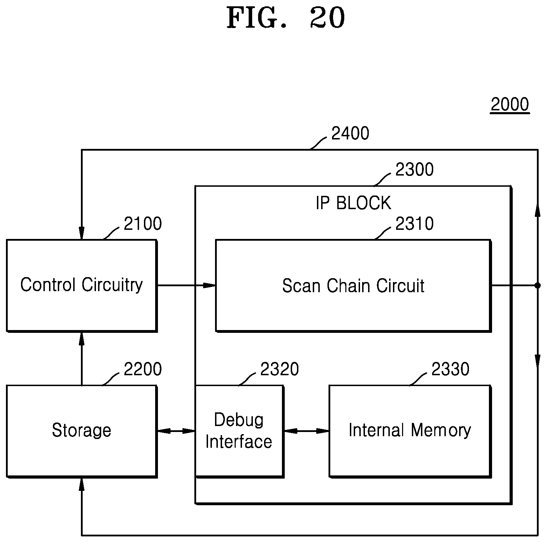

FIG. 20 is a block diagram illustrating an integrated circuit according to an embodiment.

Referring to FIG. 20, an integrated circuit 2000 includes control circuitry 2100, storage 2200, a first IP block 2300, and a feedback line 2400. The first IP block 2300 may include a scan chain circuit 2310, a debug interface 2320, and an internal memory 2330. Here, the internal memory 2330 may include static random access memory (SRAM).

The control circuitry 2100 may control the scan chain circuit 2310 included in the first IP block 2300 to perform the save and restore operations described with reference to FIGS. 1 to 18. For example, the scan chain circuit 2310 may be implemented by the scan chain circuit 1100.

During the save operation, the scan chain circuit 2310 included in the first IP block 2300 performs a save operation to store the state of the internal circuit of the first IP block 2300 at the first time point in the storage 2200.

After storing the state of the internal circuit of the first IP block 2300 at the first time point in the storage 2200, the debug interface 2320 may perform an array dump operation to store the state of the internal memory 2330 at the first time point in the storage 2200. Here, the array dump operation may refer to an operation of loading values stored in all SRAMs of an internal memory including a plurality of SRAMs into a state storage space.

To perform a restore operation after a save operation, the state of the internal memory 2330 as well as the state of the internal circuit of the first IP block 2300 may be stored in the storage 2200.

During the restore operation, the debug interface 2320 may perform an array load operation and load the state of the internal memory 2330 included in the first IP block 2300 at the first time point into the internal memory 2330 included in the first IP block 2300. Here, the array load operation may refer to an operation of loading an internal memory state stored in a state storage space into SRAMs of an internal memory included in an IP block. While the target of the array load operation may be the first IP block 2300, the inventive concept is not limited thereto. For example, the target may be a second IP block different from the first IP block 2300.

After performing the array load operation, the scan chain circuit 2310 included in the first IP block 2300 may perform a restore operation and load the state of an internal circuit of the first IP block 2300 at the first time point into the first IP block 2300. While the target of the restore operation may be the first IP block 2300, the inventive concept is not limited thereto. For example, the target may be a second IP block different from the first IP block.

While the inventive concept has been particularly shown and described with reference to embodiments thereof, it will be understood that various changes in form and details may be made therein without departing from the scope of the following claims.

## Claims

1. An integrated circuit comprising:
a plurality of combinational logic circuits (300);
a scan chain circuit (200) including a plurality of sequential logic circuits (20_1, 20_2, 20_3) configured to store output values of the plurality of combinational logic circuits (300) in synchronization with a first clock signal and sequentially provide first output values stored at a first time point in synchronization with a second clock signal; the integrated circuit is **characterised by** a
control circuitry (100) configured to receive the first output values as input values and sequentially provide the input values to the scan chain circuit (200), wherein the control circuitry (100) is configured to change a clock signal provided to the scan chain circuit (200) from the first clock signal to the second clock signal at the first time point,
wherein the plurality of sequential logic circuits (20_1, 20_2, 20_3) are configured to store first input values at a second time point occurring when a first cycle of the second clock passes, and
wherein the first input values are the same as the first output values.

2. The integrated circuit of claim 1, further comprising a storage device (600) for storing second input values,
wherein the control circuitry (100) is configured to receive the second input values as input values from the storage device (600) and sequentially provide the second input values to the scan chain circuit (200) in synchronization with the second clock signal,
wherein the plurality of sequential logic circuits (20_1, 20_2, 20_3) are configured to store third input values at a third time point at which a second cycle of the second clock passes, and
wherein the third input values are the same as the second input values.

3. The integrated circuit of claim 1 or 2, wherein the control circuitry (100) is configured to adjust the first cycle of the second clock signal based on a total shift count value, and
wherein the total shift count value is determined based on a number of shift elements included in the scan chain circuit (200).

4. The integrated circuit of claim 1, 2, or 3, wherein, when a number of inverter circuits (180) included in a scan test path of the scan chain circuit (200) is an odd number, the control circuitry (100) is configured to sequentially provide fourth input values, which are inverted values of the input values, to the scan chain circuit (200),
wherein the plurality of sequential logic circuits (20_1, 20_2, 20_3) are configured to store fifth input values at the second time point, and
wherein the fifth input values are the same as the first output values.

5. The integrated circuit of any one of claims 1 to 4, wherein, when the plurality of sequential logic circuits (20_1, 20_2, 20_3) store the first input values, the control circuitry (100) is configured to change a clock signal provided to the scan chain circuit (200) from the second clock signal to the first clock signal, and
wherein the plurality of combinational logic circuits (300) are configured to operate the first input values stored in the plurality of sequential logic circuits (20_1, 20_2, 20_3) as input values.

6. The integrated circuit of any one of claims 1 to 5, comprising a feedback line configured to input the output values to the scan chain circuit (200) as input values; and
wherein the scan chain circuit (200) is configured to sequentially provide output values of a first time point of the plurality of combinational logic circuits (300) in response to a first signal in synchronization with a present clock signal, and
the control circuitry (100) is configured to output a signal for instructing an operation of the scan chain circuit (200), and the control circuitry (100) comprises a first selector configured to output the output values to the scan chain circuit (200) through the feedback line or output input values received from a storage device to the scan chain circuit (200), in response to a second signal.

7. The integrated circuit of claim 6, wherein the plurality of sequential logic circuits (20_1, 20_2, 20_3) are configured to store first output values of first time points of the plurality of combinational logic circuits (300) in synchronization with a first clock signal when the first signal is at a first logic level, when the first signal is at a second logic level and the second signal is at the first logic level, sequentially provide the first output values as input values to the plurality of sequential logic circuits (20_1, 20_2, 20_3) through the feedback line in synchronization with the present clock signal, and store first input values at a second time point occurring when a first cycle of the present clock signal passes.

8. An operating method of an integrated circuit including a scan chain circuit (200), and control circuitry (100), the method comprising:
receiving, by the control circuitry (100), input values based on output values of a plurality of combinational logic circuits (300) stored in the scan chain circuit (200) in response to a first request;
sequentially providing, by the control circuitry (100), the input values based on the output values to the scan chain circuit (200);
wherein the sequentially providing of the input values based on the output values comprises:
storing at a first point of time output values of a plurality of combinational logic circuits (300) in a plurality of sequential logic circuits (20_1, 20_2, 20_3) included in the scan chain circuit (200) in synchronization with a first clock signal;
sequentially providing first output values corresponding to the output values stored at a first time point to the control circuitry (100) as input values by the plurality of sequential logic circuits (20_1, 20_2, 20_3) in synchronization with a second clock signal, wherein the control circuitry (100) is changes a clock signal provided to the scan chain circuit (200) from the first clock signal to the second clock signal at the first time point;
sequentially providing, by the control circuitry (100), the input values to the plurality of sequential logic circuits (20_1, 20_2, 20_3); and
storing, by the plurality of sequential logic circuits (20_1, 20_2, 20_3), first input values at a second time point occurring when a first cycle of the second clock signal passes,
wherein the first input values are the same as the first output values.

9. The method of claim 8, further comprising:
receiving, by the control circuitry (100), input values from a storage device (600) in response to a second request; and
sequentially providing, by the control circuitry (100), the input values received from the storage device to the scan chain circuit (200).

10. The method of claim 9, wherein the sequentially providing the input values from the storage device (600) comprises:
receiving, by the control circuitry (100), second input values as input values from the storage device;
sequentially providing, by the control circuitry (100), the second input values to a plurality of sequential logic circuits (20_1, 20_2, 20_3) included in the scan chain circuit (200) in synchronization with a second clock signal; and
storing, by the plurality of sequential logic circuits (20_1, 20_2, 20_3), third input values at a third time point occurring when a second cycle of the second clock passes,
wherein the third input values are same as the second input values.

11. The method of claim 8, 9 or 10, wherein the sequentially providing, by the control circuitry (100), the second input values to the plurality of sequential logic circuits (20_1, 20_2, 20_3) further comprises adjusting, by the control circuitry (100), the first cycle of the second clock signal it provides to the scan chain circuit (200) based on a total shift count value,
wherein the total shift counter value is determined based on a number of shift elements included in the scan chain circuit (200).

12. The method of any one of claims 8 to 11, wherein the sequentially providing the input values based on the output values comprises:
when a number of inverter circuits included in the scan test path of the scan chain circuit (200) is an odd number, sequentially providing, by the control circuitry (100), fourth input values, which are inverted values of the input values, to the scan chain circuit (200); and
storing, by the plurality of sequential logic circuits (20_1, 20_2, 20_3), fifth input values at the second time point,
wherein the fifth input values are the same as the first output values.

13. The method of any one of claims 8 to 12, wherein the sequentially providing the input values based on the output values comprises:
changing, by the control circuitry (100), a clock signal provided to the scan chain circuit (200) from the second clock signal to the first clock signal when the plurality of sequential logic circuits (20_1, 20_2, 20_3) store the first input values; and
operating, by the plurality of combinational logic circuits (300), the first input values stored in the plurality of sequential logic circuits (20_1, 20_2, 20_3) as input values.

## Patentansprüche

1. Integrierte Schaltung, umfassend:
eine Vielzahl kombinatorischer Logikschaltungen (300);
eine Abtastkettenschaltung (200), beinhaltend eine Vielzahl sequenzieller Logikschaltungen (20_1, 20_2, 20_3), die konfiguriert ist, Ausgangswerte der Vielzahl kombinatorischer Logikschaltungen (300) synchron mit einem ersten Taktsignal zu speichern und sequenziell erste Ausgangswerte bereitzustellen, die zu einem ersten Zeitpunkt synchron mit einem zweiten Taktsignal gespeichert werden;
wobei die integrierte Schaltung durch einen Steuerschaltkreis (100) gekennzeichnet ist, der konfiguriert ist, die ersten Ausgangswerte als Eingangswerte zu empfangen und die Eingangswerte sequenziell der Abtastkettenschaltung (200) bereitzustellen, wobei der Steuerschaltkreis (100) konfiguriert ist, ein der Abtastkettenschaltung (200) bereitgestelltes Taktsignal zum ersten Zeitpunkt vom ersten Taktsignal auf das zweite Taktsignal zu ändern,
wobei die Vielzahl sequenzieller Logikschaltungen (20_1, 20_2, 20_3) konfiguriert ist, erste Eingangswerte zu einem zweiten Zeitpunkt zu speichern, der eintritt, wenn ein erster Zyklus des zweiten Taktes abgelaufen ist, und
wobei die ersten Eingangswerte mit den ersten Ausgangswerten übereinstimmen.

2. Integrierte Schaltung nach Anspruch 1, ferner umfassend eine Speichervorrichtung (600) zum Speichern zweiter Eingangswerte,
wobei der Steuerschaltkreis (100) konfiguriert ist, die zweiten Eingangswerte als Eingangswerte von der Speichervorrichtung (600) zu empfangen und diese sequenziell synchron mit dem zweiten Taktsignal der Abtastkettenschaltung (200) bereitzustellen,
wobei die Vielzahl sequenzieller Logikschaltungen (20_1, 20_2, 20_3) konfiguriert ist, dritte Eingangswerte zu einem dritten Zeitpunkt zu speichern, an dem ein zweiter Zyklus des zweiten Takts abgelaufen ist, und
wobei die dritten Eingangswerte mit den zweiten Eingangswerten übereinstimmen.

3. Integrierte Schaltung nach Anspruch 1 oder 2, wobei der Steuerschaltkreis (100) konfiguriert ist, den ersten Zyklus des zweiten Taktsignals basierend auf einem Gesamtverschiebungszählwert anzupassen, und
wobei der Gesamtverschiebungszählwert basierend auf einer Anzahl von Verschiebungselementen, die in der Abtastkettenschaltung (200) beinhaltet ist, bestimmt wird.

4. Integrierte Schaltung nach Anspruch 1, 2 oder 3, wobei, wenn eine Anzahl von Inverterschaltungen (180), die in einem Abtasttestpfad derAbtastkettenschaltung (200) beinhaltet sind, eine ungerade Zahl ist, der Steuerschaltkreis (100) konfiguriert ist, der Abtastkettenschaltung (200) sequenziell vierte Eingangswerte bereitzustellen, die invertierte Werte der Eingangswerte sind,
wobei die Vielzahl sequenzieller Logikschaltungen (20_1, 20_2, 20_3) konfiguriert ist, fünfte Eingangswerte zum zweiten Zeitpunkt zu speichern, und
wobei die fünften Eingangswerte mit den ersten Ausgangswerten übereinstimmen.

5. Integrierte Schaltung nach einem der Ansprüche 1 bis 4, wobei, wenn die Vielzahl sequenzieller Logikschaltungen (20_1, 20_2, 20_3) die ersten Eingangswerte speichert, der Steuerschaltkreis (100) konfiguriert ist, ein der Abtastkettenschaltung (200) bereitgestelltes Taktsignal vom zweiten Taktsignal auf das erste Taktsignal zu ändern, und
wobei die Vielzahl kombinatorischer Logikschaltungen (300) konfiguriert ist, die in der Vielzahl sequenzieller Logikschaltungen (20_1, 20_2, 20_3) gespeicherten ersten Eingangswerte als Eingangswerte zu verarbeiten.

6. Integrierte Schaltung nach einem der Ansprüche 1 bis 5, umfassend eine Rückkopplungsleitung, die konfiguriert ist, die Ausgangswerte als Eingangswerte in den Abtastkettenschaltung (200) einzugeben; und
wobei die Abtastkettenschaltung (200) konfiguriert ist, sequenziell Ausgangswerte eines ersten Zeitpunkts der Vielzahl kombinatorischer Logikschaltungen (300) als Reaktion auf ein erstes Signal synchron mit einem vorhandenen Taktsignal bereitzustellen, und
der Steuerschaltkreis (100) konfiguriert ist, ein Signal zum Anweisen eines Betriebs der Abtastkettenschaltung (200) auszugeben, und der Steuerschaltkreis (100) einen ersten Selektor umfasst, der konfiguriert ist, die Ausgangswerte über die Rückkopplungsleitung an die Abtastkettenschaltung (200) auszugeben oder Eingangswerte, die von einer Speichervorrichtung empfangen werden, als Reaktion auf ein zweites Signal an die Abtastkettenschaltung (200) auszugeben.

7. Integrierte Schaltung nach Anspruch 6, wobei die Vielzahl sequenzieller Logikschaltungen (20_1, 20_2, 20_3) konfiguriert ist, erste Ausgangswerte erster Zeitpunkte der Vielzahl kombinatorischer Logikschaltungen (300) synchron mit einem ersten Taktsignal zu speichern, wenn das erste Signal auf einem ersten Logikpegel ist, wenn das erste Signal auf einem zweiten Logikpegel ist und das zweite Signal auf dem ersten Logikpegel ist, sequenziell die ersten Ausgangswerte als Eingangswerte der Vielzahl von sequenziellen Logikschaltungen (20_1, 20_2, 20_3) über die Rückkopplungsleitung synchron mit dem aktuellen Taktsignal bereitzustellen und erste Eingangswerte zu einem zweiten Zeitpunkt zu speichern, der eintritt, wenn ein erster Zyklus des aktuellen Taktsignals abgelaufen ist.

8. Betriebsverfahren für eine integrierte Schaltung, die eine Abtastkettenschaltung (200) und einen Steuerschaltkreis (100) beinhaltet, wobei das Verfahren Folgendes umfasst:
Empfangen von Eingangswerten durch den Steuerschaltkreis (100) basierend auf Ausgangswerten einer Vielzahl kombinatorischer Logikschaltungen (300), die in der Abtastkettenschaltung (200) gespeichert sind, in Reaktion auf eine erste Anfrage;
sequenzielles Bereitstellen der Eingangswerte auf Basis der Ausgangswerte durch den Steuerschaltkreis (100) für die Abtastkettenschaltung (200);
wobei das sequenzielle Bereitstellen der Eingangswerte basierend auf den Ausgangswerten Folgendes umfasst:
Speichern von Ausgangswerten einer Vielzahl kombinatorischer Logikschaltungen (300) zu einem ersten Zeitpunkt in einer Vielzahl sequenzieller Logikschaltungen (20_1, 20_2, 20_3), die in der Abtastkettenschaltung (200) beinhaltet sind, synchron mit einem ersten Taktsignal;
sequenzielles Bereitstellen erster Ausgangswerte, die den zu einem ersten Zeitpunkt gespeicherten Ausgangswerten entsprechen, als Eingangswerte für den Steuerschaltkreis (100) durch die Vielzahl sequenzieller Logikschaltungen (20_1, 20_2, 20_3) synchron mit einem zweiten Taktsignal, wobei der Steuerschaltkreis (100) ein Taktsignal, das der Abtastkettenschaltung (200) bereitgestellt wird, zum ersten Zeitpunkt vom ersten Taktsignal auf das zweite Taktsignal ändert;
sequenzielles Bereitstellen der Eingangswerte durch den Steuerschaltkreis (100) an die Vielzahl sequenzieller Logikschaltungen (20_1, 20_2, 20_3); und
Speichern, durch die Vielzahl sequenzieller Logikschaltungen (20_1, 20_2, 20_3), erster Eingangswerte zu einem zweiten Zeitpunkt, der eintritt, wenn ein erster Zyklus des zweiten Taktsignals abgelaufen ist,
wobei die ersten Eingangswerte mit den ersten Ausgangswerten übereinstimmen.

9. Verfahren nach Anspruch 8, weiter umfassend:
Empfangen von Eingangswerten von einer Speichervorrichtung (600) durch den Steuerschaltkreis (100) in Reaktion auf eine zweite Anforderung; und
sequenzielles Bereitstellen, durch den Steuerschaltkreis (100), der Eingangswerte, die von der Speichervorrichtung empfangen werden, an die Abtastkettenschaltung (200).

10. Verfahren nach Anspruch 9, wobei das sequenzielle Bereitstellen der Eingangswerte aus der Speichervorrichtung (600) Folgendes umfasst:
Empfangen, durch den Steuerschaltkreis (100), zweiter Eingangswerte als Eingangswerte von der Speichervorrichtung;
sequenzielles Bereitstellen, durch den Steuerschaltkreis (100), der zweiten Eingangswerte für eine Vielzahl sequenzieller Logikschaltungen (20_1, 20_2, 20_3) in der Abtastkettenschaltung (200) synchron mit einem zweiten Taktsignal; und
Speichern, durch die Vielzahl sequenzieller Logikschaltungen (20_1, 20_2, 20_3), dritter Eingangswerte zu einem dritten Zeitpunkt, der eintritt, wenn ein zweiter Zyklus des zweiten Taktes abgelaufen ist,
wobei die dritten Eingangswerte mit den zweiten Eingangswerten übereinstimmen.

11. Verfahren nach Anspruch 8, 9 oder 10, wobei das sequenzielle Bereitstellen, durch den Steuerschaltkreis (100), der zweiten Eingangswerte an die Vielzahl sequenzieller Logikschaltungen (20_1, 20_2, 20_3) ferner Anpassen, durch den Steuerschaltkreis (100), des ersten Zyklus des zweiten Taktsignals, das er der Abtastkettenschaltung (200) bereitstellt, auf Basis eines Gesamtverschiebungszählwerts umfasst,
wobei der Gesamtverschiebungszählwert auf Basis einer Anzahl von Verschiebungselementen, die in der Abtastkettenschaltung (200) beinhaltet sind, bestimmt wird.

12. Verfahren nach einem der Ansprüche 8 bis 11, wobei das sequenzielle Bereitstellen der Eingangswerte basierend auf den Ausgangswerten Folgendes umfasst:
wenn eine Anzahl von Inverterschaltungen, die im Abtasttestpfad der Abtastkettenschaltung (200) beinhaltet sind, eine ungerade Zahl ist, sequenzielles Bereitstellen, durch den Steuerschaltkreis (100), vierter Eingangswerte, die invertierte Werte der Eingangswerte sind, an die Abtastkettenschaltung (200); und
Speichern, durch eine Vielzahl sequenzieller Logikschaltungen (20_1, 20_2, 20_3), fünfter Eingangswerte zum zweiten Zeitpunkt,
wobei die fünften Eingangswerte mit den ersten Ausgangswerten übereinstimmen.

13. Verfahren nach einem der Ansprüche 8 bis 12, wobei das sequenzielle Bereitstellen der Eingangswerte basierend auf den Ausgangswerten Folgendes umfasst:
Ändern, durch den Steuerschaltkreis (100), eines Taktsignals, das der Abtastkettenschaltung (200) bereitgestellt wird, vom zweiten Taktsignal zum ersten Taktsignal, wenn die Vielzahl sequenzieller Logikschaltungen (20_1, 20_2, 20_3) die ersten Eingangswerte speichert; und
Verarbeiten, durch die Vielzahl kombinatorischer Logikschaltungen (300), der ersten Eingangswerte, die in der Vielzahl sequenzieller Logikschaltungen (20_1, 20_2, 20_3) gespeichert sind, als Eingangswerte.

## Revendications

1. Circuit intégré comprenant :
une pluralité de circuits logiques combinatoires (300) ;
un circuit de chaîne de balayage (200) incluant une pluralité de circuits logiques séquentiels (20_1, 20_2, 20_3) configurés pour stocker des valeurs de sortie de la pluralité de circuits logiques combinatoires (300) en synchronisation avec un premier signal d'horloge et fournir séquentiellement des premières valeurs de sortie stockées à un premier point temporel en synchronisation avec un second signal d'horloge ;
le circuit intégré est **caractérisé par** un circuit de commande (100) configuré pour recevoir les premières valeurs de sortie comme valeurs d'entrée et fournir séquentiellement les valeurs d'entrée au circuit de chaîne de balayage (200), dans lequel le circuit de commande (100) est configuré pour changer un signal d'horloge fourni au circuit de chaîne de balayage (200) du premier signal d'horloge au second signal d'horloge au premier point temporel,
dans lequel la pluralité de circuits logiques séquentiels (20_1, 20_2, 20_3) sont configurés pour stocker les premières valeurs d'entrée à un deuxième point temporel, survenant lorsqu'un premier cycle du second signal d'horloge passe, et
dans lequel les premières valeurs d'entrée sont identiques aux premières valeurs de sortie.

2. Circuit intégré selon la revendication 1, comprenant en outre un dispositif de stockage (600) destiné à stocker des deuxièmes valeurs d'entrée,
dans lequel le circuit de commande (100) est configuré pour recevoir les deuxièmes valeurs d'entrée comme valeurs d'entrée du dispositif de stockage (600) et fournir séquentiellement les deuxièmes valeurs d'entrée au circuit de chaîne de balayage (200) en synchronisation avec le second signal d'horloge,
dans lequel la pluralité de circuits logiques séquentiels (20_1, 20_2, 20_3) sont configurés pour stocker des troisièmes valeurs d'entrée à un troisième point temporel auquel passe un deuxième cycle du second signal d'horloge, et
dans lequel les troisièmes valeurs d'entrée sont identiques aux deuxièmes valeurs d'entrée.

3. Circuit intégré selon la revendication 1 ou 2, dans lequel le circuit de commande (100) est configuré pour ajuster le premier cycle du second signal d'horloge sur la base d'une valeur de comptage de décalage total, et
dans lequel la valeur de décalage total est déterminée sur la base du nombre d'éléments de décalage inclus dans le circuit de chaîne de balayage (200).

4. Circuit intégré selon la revendication 1, 2 ou 3, dans lequel, lorsque le nombre de circuits inverseurs (180) inclus dans un chemin de test de balayage du circuit de chaîne de balayage (200) est un nombre impair, le circuit de commande (100) est configuré pour fournir séquentiellement des quatrièmes valeurs d'entrée, qui sont des valeurs inversées des valeurs d'entrée, au circuit de chaîne de balayage (200),
dans lequel la pluralité de circuits logiques séquentiels (20_1, 20_2, 20_3) sont configurés pour stocker des cinquièmes valeurs d'entrée au deuxième point temporel, et
dans lequel les cinquièmes valeurs d'entrée sont identiques aux premières valeurs de sortie.

5. Circuit intégré selon l'une quelconque des revendications 1 à 4, dans lequel, lorsque la pluralité de circuits logiques séquentiels (20_1, 20_2, 20_3) stockent les premières valeurs d'entrée, le circuit de commande (100) est configuré pour changer un signal d'horloge fourni au circuit de la chaîne de balayage (200) du second signal d'horloge au premier signal d'horloge, et
dans lequel la pluralité de circuits logiques combinatoires (300) est configurée pour exploiter les premières valeurs d'entrée stockées dans la pluralité de circuits logiques séquentiels (20_1, 20_2, 20_3) comme valeurs d'entrée.

6. Circuit intégré selon l'une quelconque des revendications 1 à 5, comprenant une ligne de rétroaction configurée pour transmettre les valeurs de sortie au circuit de chaîne de balayage (200) comme valeurs d'entrée ; et
dans lequel le circuit de chaîne de balayage (200) est configuré pour fournir séquentiellement les valeurs de sortie d'un premier point temporel de la pluralité de circuits logiques combinatoires (300) en réponse à un premier signal en synchronisation avec un signal d'horloge actuel, et
le circuit de commande (100) est configuré pour produire un signal destiné à ordonner un fonctionnement du circuit de chaîne de balayage (200), et le circuit de commande (100) comprend un premier sélecteur configuré pour produire les valeurs de sortie au circuit de chaîne de balayage (200) via la ligne de rétroaction ou pour produire les valeurs d'entrée reçues d'un dispositif de stockage au circuit de chaîne de balayage (200), en réponse à un second signal.

7. Circuit intégré selon la revendication 6, dans lequel la pluralité de circuits logiques séquentiels (20_1, 20_2, 20_3) sont configurés pour stocker les premières valeurs de sortie des premiers points temporels de la pluralité de circuits logiques combinatoires (300) en synchronisation avec un premier signal d'horloge lorsque le premier signal est à un premier niveau logique, et lorsque le premier signal est à un second niveau logique et le second signal est au premier niveau logique, fournir séquentiellement les premières valeurs de sortie comme valeurs d'entrée à la pluralité de circuits logiques séquentiels (20_1, 20_2, 20_3) via la ligne de rétroaction en synchronisation avec le signal d'horloge actuel, et stocker les premières valeurs d'entrée à un deuxième point temporel survenant lorsqu'un premier cycle du signal d'horloge actuel passe.

8. Procédé de fonctionnement d'un circuit intégré incluant un circuit de chaîne de balayage (200) et un circuit de commande (100), le procédé comprenant :
la réception, via le circuit de commande (100), de valeurs d'entrée sur la base des valeurs de sortie d'une pluralité de circuits logiques combinatoires (300) stockées dans le circuit de chaîne de balayage (200) en réponse à une première demande ;
la fourniture séquentielle, via le circuit de commande (100), des valeurs d'entrée sur la base des valeurs de sortie au circuit de chaîne de balayage (200) ;
dans lequel la fourniture séquentielle des valeurs d'entrée sur la base des valeurs de sortie comprend :
le stockage à un premier point temporel de valeurs de sortie d'une pluralité de circuits logiques combinatoires (300) dans une pluralité de circuits logiques séquentiels (20_1, 20_2, 20_3) inclus dans le circuit de chaîne de balayage (200) en synchronisation avec un premier signal d'horloge ;
la fourniture séquentielle de premières valeurs de sortie correspondant aux valeurs de sortie stockées à un premier point temporel au circuit de commande (100) comme valeurs d'entrée par la pluralité de circuits logiques séquentiels (20_1, 20_2, 20_3) en synchronisation avec un second signal d'horloge, dans lequel le circuit de commande (100) change un signal d'horloge fourni au circuit de chaîne de balayage (200) du premier signal d'horloge au second signal d'horloge au premier point temporel ;
la fourniture séquentielle, via le circuit de commande (100), des valeurs d'entrée à la pluralité de circuits logiques séquentiels (20_1, 20_2, 20_3) ; et
le stockage, via la pluralité de circuits logiques séquentiels (20_1, 20_2, 20_3), des premières valeurs d'entrée à un deuxième point temporel, lorsqu'un premier cycle du second signal d'horloge passe,
dans lequel les premières valeurs d'entrée sont identiques aux premières valeurs de sortie.

9. Procédé selon la revendication 8, comprenant en outre :
la réception, via le circuit de commande (100), de valeurs d'entrée provenant d'un dispositif de stockage (600) en réponse à une seconde demande ; et
la fourniture séquentielle, via le circuit de commande (100), des valeurs d'entrée reçues du dispositif de stockage au circuit de chaîne de balayage (200).

10. Procédé selon la revendication 9, dans lequel la fourniture séquentielle des valeurs d'entrée provenant du dispositif de stockage (600) comprend :
la réception, via le circuit de commande (100), de deuxièmes valeurs d'entrée comme valeurs d'entrée provenant du dispositif de stockage ;
la fourniture séquentielle, via le circuit de commande (100), des deuxièmes valeurs d'entrée à une pluralité de circuits logiques séquentiels (20_1, 20_2, 20_3) inclus dans le circuit de chaîne de balayage (200) en synchronisation avec un second signal d'horloge ; et
le stockage, via la pluralité de circuits logiques séquentiels (20_1, 20_2, 20_3), de troisièmes valeurs d'entrée à un troisième point temporel, survenant lorsqu'un second cycle du second signal d'horloge passe,
dans lequel les troisièmes valeurs d'entrée sont identiques aux deuxièmes valeurs d'entrée.

11. Procédé selon la revendication 8, 9 ou 10, dans lequel la fourniture séquentielle, via le circuit de commande (100), des deuxièmes valeurs d'entrée à la pluralité de circuits logiques séquentiels. (20_1, 20_2, 20_3) comprend en outre l'ajustement, via le circuit de commande (100), du premier cycle du second signal d'horloge qu'il fournit au circuit de chaîne de balayage (200) sur la base d'une valeur de comptage de décalage total,
dans lequel la valeur de comptage de décalage total est déterminée sur la base du nombre d'éléments de décalage inclus dans le circuit de chaîne de balayage (200).

12. Procédé selon l'une quelconque des revendications 8 à 11, dans lequel la fourniture séquentielle des valeurs d'entrée sur la base des valeurs de sortie comprend :
lorsque le nombre de circuits inverseurs inclus dans le chemin de test de balayage du circuit de chaîne de balayage (200) est impair, la fourniture séquentielle, via le circuit de commande (100), de quatrièmes valeurs d'entrée, qui sont des valeurs inversées des valeurs d'entrée, au circuit de chaîne de balayage (200) ; et
le stockage, via la pluralité de circuits logiques séquentiels (20_1, 20_2, 20_3), de cinquièmes valeurs d'entrée au deuxième point temporel,
dans lequel les cinquièmes valeurs d'entrée sont identiques aux premières valeurs de sortie.

13. Procédé selon l'une quelconque des revendications 8 à 12, dans lequel la fourniture séquentielle des valeurs d'entrée sur la base des valeurs de sortie comprend :
le changement, via le circuit de commande (100), d'un signal d'horloge fourni au circuit de chaîne de balayage (200) du second signal d'horloge au premier signal d'horloge lorsque la pluralité de circuits logiques séquentiels (20_1, 20_2, 20_3) stockent les premières valeurs d'entrée ; et
l'exploitation, via la pluralité de circuits logiques combinatoires (300), des premières valeurs d'entrée stockées dans la pluralité de circuits logiques séquentiels (20_1, 20_2, 20_3) comme valeurs d'entrée.
